# EUROPEAN PATENT APPLICATION

(11) **EP 4 704 054 A1**
(43) Date of publication of application: **04.03.2026**
(21) Application number: 24207432.6
(22) Date of filing: 18.10.2024
(51) Int. Cl.: G06V 30/19, G06V 30/24, G06V 30/413, G06V 30/414, G06V 30/422

(54) **METHOD TO DETERMINE WHEN TO FINETUNE RASTER DIGITIZATION COMPONENTS**

(30) Priority: 29.08.2024 IN 202411065181
(71) Applicant: Services Pétroliers Schlumberger, 75007 Paris (FR); GeoQuest Systems B.V., 2514 JG The Hague (NL)
(72) Inventor: SHRIVASTAVA, Ritik, 411006 Pune (IN); GUNE, Omkar Anil, 411006 Pune (IN); MANGSULI, Purnaprajna Raghavendra, 411006 Pune (IN)
(74) Representative: Schlumberger Intellectual Property Department

(57) **Abstract**

A method determines when to finetune raster digitization components. The method includes generating a raster retraining score for a raster segmentation model of a raster digitization engine. The method further includes generating a header retraining score for a header segmentation model of the raster digitization engine. The method further includes generating a curve retraining score for a curve segmentation model of the raster digitization engine. The method further includes retraining one or more of the raster segmentation model, the header segmentation model, and the curve segmentation model using the raster retraining score, the header retraining score, and the curve retraining score.

## Description

### BACKGROUND

Workflows utilizing deep learning are used to address real world problems. Depending upon the nature of the problem to be addressed, the workflows may contain one or more modules that involve machine learning models executing in cascade or in parallel. Machine learning models are mathematical models that may utilize machine learning and deep learning algorithms and techniques. While the workflows provide robust performance when training data and test data are similar in distribution, a performance drop may be observed when training and testing data distributions differ. In latter case, fine-tuning or model retraining may be used to improve the overall performance of the workflow. However, in many cases, when a workflow is deployed in production, a challenge may exist as to identifying when to finetune or retrain one or more of the machine learning models of the workflow, since the data distribution shift from training to testing may be non-trivial. Efforts may be further frustrated due to data privacy and residency issues. For a workflow with multiple machine learning models, a challenge may exist to determine and select the individual model to be finetuned or retrained.

### SUMMARY

In general, in one or more aspects, the disclosure relates to a method that determines when to finetune raster digitization components. The method includes generating a raster retraining score for a raster segmentation model of a raster digitization engine. The method further includes generating a header retraining score for a header segmentation model of the raster digitization engine. The method further includes generating a curve retraining score for a curve segmentation model of the raster digitization engine. The method further includes retraining one or more of the raster segmentation model, the header segmentation model, and the curve segmentation model using the raster retraining score, the header retraining score, and the curve retraining score.

In general, in one or more aspects, the disclosure relates to a system that includes at least one processor and an application that executes on the at least one processor. Executing the application performs generating a raster retraining score for a raster segmentation model of a raster digitization engine. Executing the application performs generating a header retraining score for a header segmentation model of the raster digitization engine. Executing the application performs generating a curve retraining score for a curve segmentation model of the raster digitization engine. Executing the application performs retraining one or more of the raster segmentation model, the header segmentation model, and the curve segmentation model using the raster retraining score, the header retraining score, and the curve retraining score.

In general, in one or more aspects, the disclosure relates to a non-transitory computer readable medium including instructions executable by at least one processor. Executing the instructions performs generating a raster retraining score for a raster segmentation model of a raster digitization engine. Executing the instructions performs generating a header retraining score for a header segmentation model of the raster digitization engine. Executing the instructions performs generating a curve retraining score for a curve segmentation model of the raster digitization engine. Executing the instructions performs retraining one or more of the raster segmentation model, the header segmentation model, and the curve segmentation model using the raster retraining score, the header retraining score, and the curve retraining score.

Other aspects of one or more embodiments may be apparent from the following description and the appended claims.

### BRIEF DESCRIPTION OF DRAWINGS

FIG. 1, FIG. 2, FIG. 3, FIG. 4, and FIG. 5 show systems in accordance with one or more embodiments of the disclosure.
FIG. 6 shows a flowchart in accordance with one or more embodiments of the disclosure.
FIG. 7, FIG. 8, FIG. 9, FIG. 10, FIG. 11, FIG. 12, FIG. 13, and FIG. 14 show examples in accordance with one or more embodiments of the disclosure.
FIG. 15A and FIG. 15B show computing systems in accordance with one or more embodiments.

Similar elements in the various figures may be denoted by similar names and reference numerals. The features and elements described in one figure may extend to similarly named features and elements in different figures.

### DETAILED DESCRIPTION

Embodiments of the disclosure determine when to retrain raster digitization components, which may include fine-tuning the raster digitization components. The decision for retraining the raster digitization components may be performed automatically using the inputs and outputs to the raster digitization components. Calculating and executing retraining decisions improves the functioning of computer systems and machine learning models by reducing the amount computational resources utilized by computer systems and by increasing the accuracy of the machine learning models being used.

The raster digitization components perform raster digitization, which is the process of converting raster images (which are composed of pixels, such as scanned maps, satellite images, photographs, well logs, *etc.*) into data points. For example, raster digitization may convert a curve of measurement data into points that may be stored in a tabular format. Raster digitization may be performed to enable the manipulation, analysis, and integration with other data in geographic information systems (GIS).

In an embodiment, a retraining decision model may monitor the components of a raster digitization engine, which may include multiple models. The inputs and outputs for each of the models may be monitored, processed, and compared generate retraining scores for each of the models. The retraining of the individual models may be executed independently based on the values of the retraining scores for each of the components. Dependencies between the models may also be considered for retraining decisions. For example, if a second model depends on a first model and the first model is retrained, then the second model may also be retrained due to the dependency. In an embodiment, the raster digitization engine may include a raster segmentation model, a header segmentation model, and a curve segmentation model. A raster retraining decision model may monitor the raster segmentation model to generate a raster retraining score for the raster segmentation model used to determine when to retrain the raster segmentation model. A header retraining decision model may monitor the header segmentation model to generate a header retraining score for the header segmentation model used to determine when to retrain the header segmentation model. A curve retraining decision model may monitor the curve segmentation model to generate a curve retraining score for the curve segmentation model used to determine when to retrain the curve segmentation model.

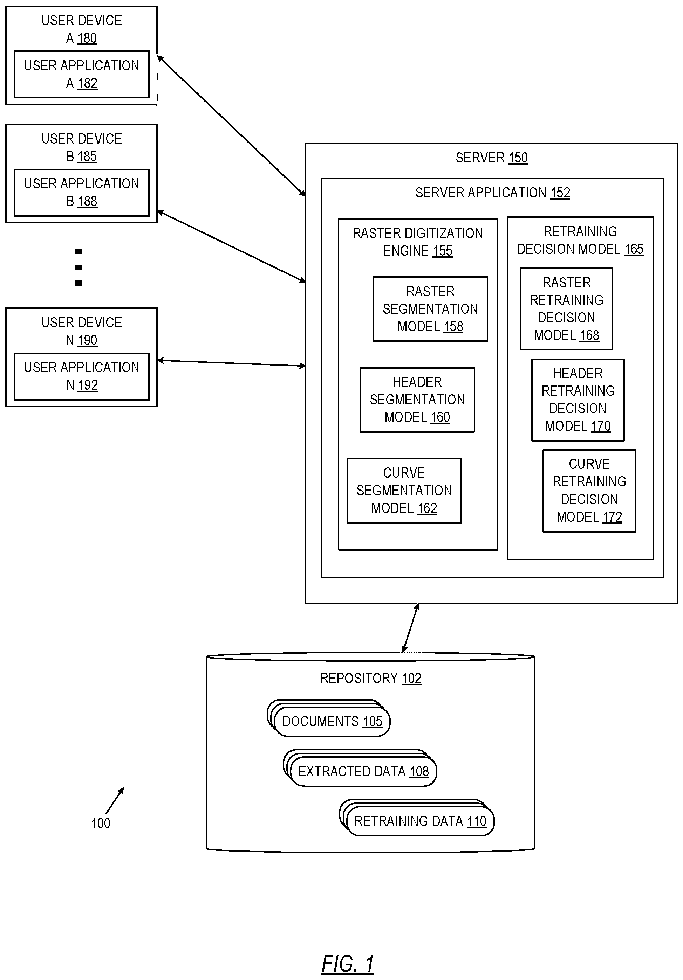

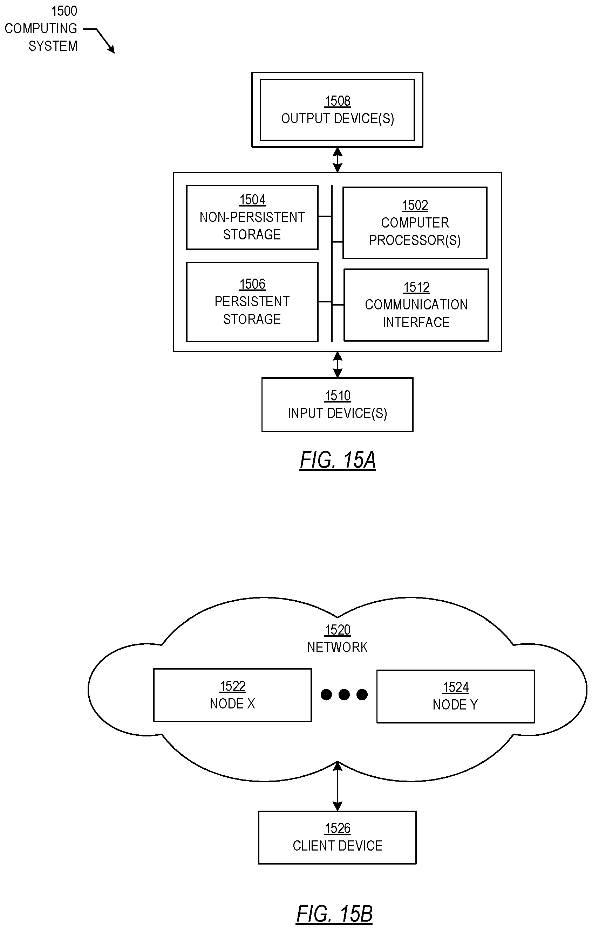

Turning to FIG. 1, the system (100) is a computing system that operates to determine when to retrain components of the raster digitization engine (155). The components of the system (100) may each include one or more processors and one or more memories with data and instructions in accordance with the computing systems described in FIG. 15A and FIG. 15B. The system (100) includes the server (150) that communicates with the repository (102) and the user devices A (180) and B (185) through N (190).

The repository (102) is a collection of storage devices (e.g., file systems, databases, data structures, *etc.*) that store and maintain the data used by the system (100). The repository (102) may include multiple different, potentially heterogenous, storage devices. The repository (102) stores data utilized by other components of the system (100). The data stored by the repository (102) includes the documents (105), the extracted data (108), and the retraining data (110).

The documents (105) are collections of data that are processed by the system (100). Each of the documents (105) may include multiple segments with different types of information in each of the segments. Different methods and algorithms may be used to extract the information from the different segments. As an example, a document may include a header segment and a curve segment. The header segment may include metadata information about a well and the type of data captured in the document. In an embodiment, information in a header segment may include parameters that identify the type of information captured within the curve segment (*e.g*., the properties measured and units used) and may provide information about the well from which the information was captured, including location data, date, time, satellite system coordinates, formation name, *etc.* The curve segment may include a record of physical properties of the well.

Each of the documents, and the sequence thereof, maybe converted to one or more images for processing by the system 100. In the present application, an image is the same as used in the art of computer science to refer to an array of pixels, whereby each pixel has a corresponding greyscale or color value. The images created from the documents 105 may include header images and curve images. A header image is an image from the header portion of a document. A curve image is an image from the portion of the document having a curve.

An image for a document may further be split into image tiles for processing by the models of the system (100). As an example, a document may be converted to an image with a resolution of 700 by 900 pixels and a model for processing the image may operate on images with a resolution of 300 by 300. The 700 by 900 image may be extended to an image that is 900 by 900. The pixels added in the extended image may be black. The extended 900 by 900 image may then be split into nine 300 by 300 images that are suitable for the model to process. Different resolutions may be used.

In an embodiment, the documents (105) may be well logs and include records of geological formations penetrated by a borehole. Well logs may include measurements of the physical properties of the rock and fluids encountered during the drilling process. Well logs may contain various types of information, including lithology, porosity, permeability, fluid content, resistivity, density, neutron porosity, gamma ray activity, acoustic properties, temperature, pressure, borehole diameter, fluid identification, formation dip and strike, mechanical properties, gas content, formation boundaries, cuttings analysis, mud properties, casing and cementing details, *etc.*

The extracted data (108) are collections of information that is extracted from the documents (105). The extracted data (108) may be extracted from the documents (105) by the raster digitization engine (155). The extracted data (108) may include data from the documents (105) that has been reformatted for other programs to process and use. For example, the extracted data (108) may include tabular data that corresponds to information extracted from an image of one of the documents (105).

The retraining data (110) are collections of information used to retrain the machine learning models utilized by the raster digitization engine (155). For example, the retraining data (110) may include retraining scores determined by the components of the retraining decision model (165) for the components of the raster digitization engine (155).

The server (150) is a collection of one or more computing systems that communicate with the repository (102) and the user devices A (180) through N (190). The server (150) may be operated to execute the server application (152) to process the documents (105) with the raster digitization engine (155) and to decide whether the models of the raster digitization engine (155) need retraining with the retraining decision model (165).

The server application (152) is a component of the server (150). The server application (152) includes the raster digitization engine (155) and the retraining decision model (165).

The raster digitization engine (155) is a component of the server application (152). The raster digitization engine (155) may be executed to process the documents (105) and generate the extracted data (108). The raster digitization engine (155) performs the extraction of the extracted data (108) using one or more machine learning models, which may include the raster segmentation model (158), the header segmentation model (160), and the curve segmentation model (162).

Each of the models utilized within the system (100) may include one or more machine learning models. The machine learning models used by the system (100) may include neural networks and may operate using one or more layers of weights that may be sequentially applied to sets of input data, which may be referred to as input vectors. For each layer of a machine learning model, the weights of the layer may be multiplied by the input vector to generate a collection of products, which may then be summed to generate an output for the layer that may be fed, as input data, to a next layer within the machine learning model. The output of the machine learning model may be the output generated from the last layer within the machine learning model. Multiple machine learning models may operate sequentially or in parallel. The output may be a vector or scalar value. The layers within the machine learning model may be different and correspond to different types of models. As an example, the layers may include layers for recurrent neural networks, convolutional neural networks, transformer models, attention layers, perceptron models, *etc.* Perceptron models may include one or more fully connected (also referred to as linear) layers that may convert between the different dimensions used by the inputs and the outputs of a model. Different types of machine learning algorithms may be used, including regression, decision trees, random forests, support vector machines, clustering, classifiers, principal component analysis, gradient boosting, *etc.*

The machine learning models may be trained (or retrained) by inputting training data to a machine learning model to generate training outputs that are compared to expected outputs. For supervised training, the expected outputs may be labels associated with a given input. For unsupervised learning, the expected outputs may be previous outputs from the machine learning model. The difference between the training output and the expected output may be processed with a loss function to identify updates to the weights of the layers of the model. After training on a batch of inputs, the updates identified by the loss function may be applied to the machine learning model to generate a trained machine learning model. Different algorithms may be used to calculate and apply the updates to the machine learning model, including back propagation, gradient descent, *etc.*

The raster segmentation model (158) is a component of the raster digitization engine (155). The raster segmentation model (158) processes the documents (105) to generate masks that identify the segments within the documents (105). In an embodiment, each individual mask may correspond to an individual segment of the multiple segments within a document. The raster segmentation model (158) may output multiple different masks that relate to different types of data and segments within the documents (105).

A mask is an array of data that corresponds to the arrays of pixels of the images generated from the documents (105). In an embodiment, the values in the array of data for a mask may be binary values that identify whether a corresponding pixel from an image (the mask and image having similar array dimensions) is part of a segment. For example, for each corresponding pixel, a header mask may include a value of 0 to indicate that the pixel is not part of the header and include a value of 1 to indicate that the pixel is a part of a header segment of the document.

The header segmentation model (160) is a component of the raster digitization engine (155). The header segmentation model (160) may use output from the raster segmentation model (158) to process the documents (105) to identify the header segments within the documents (105), from which the header data within the documents (105) may be extracted to form at least a portion of the extracted data (108). The header data is data in the header (*i*.*e.*, the header segment, described above). The output of the header segmentation model (160) may be a header mask that identifies the location of a header within one of the documents (105).

The curve segmentation model (162) is a component of the raster digitization engine (155). The curve segmentation model (162) may use output from the raster segmentation model (158) (*i.e.*, the track area mask from the raster segmentation model (158)) to process the documents (105) and generate a portion of the extracted data (108). The curve segmentation model (162) may extract the curve information from one of the documents (105) that is output to a tabular format within the extracted data (108). The curve information is data from the curve in the curve segment, described above).

The retraining decision model (165) is a component of the server application (152). The retraining decision model (165) generates the retraining data (110), which is used to determine when the raster segmentation model (158), the header segmentation model (160), and the curve segmentation model (162) are to be retrained. The retraining decisions for the models of the raster digitization engine (155) are performed independently. The retraining decision model (165) includes the raster retraining decision model (168), the header retraining decision model (170), and the curve retraining decision model (172).

The raster retraining decision model (168) is a component of the retraining decision model (165). The raster retraining decision model (168) generates raster retraining scores for the raster segmentation model (158) from the inputs and outputs of the raster segmentation model (158). The raster retraining score may be a numerical score used to determine whether to retrain a component of the raster segmentation model (158). The raster retraining decision model (168) may trigger the retraining of the raster segmentation model (158) based on the raster retraining score.

The header retraining decision model (170) is a component of the retraining decision model (165). The header retraining decision model (170) generates the header retraining scores for the header segmentation model (160) from the inputs and outputs of the header segmentation model (160). The header retraining decision model (170) may trigger the retraining of the header segmentation model (160) based on the header retraining score.

The curve retraining decision model (172) is a component of the retraining decision model (165). The curve retraining decision model (172) generates the curve retraining score of the retraining data (110), for the curve segmentation model (162). Responsive to the curve retraining scores, the curve retraining decision model (172) may trigger the retraining of the curve segmentation model (162).

Continuing with FIG. 1, the user devices A (180) and B (185) through N (190) may interact with the server (150). The user devices A (180) and B (185) through N (190) may be computing systems in accordance with FIG. 15A and FIG. 15B. The devices A (180) and B (185) through N (190) may include and execute the user applications A (182) and B (188) through N (192).

The user applications A (182) and B (188) through N (192) are programs that operate on the user devices A (180) and B (185) through N (190) to provide user interaction by collecting user inputs and displaying outputs in response to the user inputs. The user applications A (182) and B (188) through N (192) may include user interfaces with user interface elements to receive inputs and display outputs to the users of the system (100).

In an embodiment, the user device A (180) is operated by a user to extract data from the documents (105). For example, the user may utilize a user interface to identify one or more of the documents (105) to be processed with the raster digitization engine (155) and generate the extracted data (108). In an embodiment, the user device N (190) may be operated by a developer of the system to trigger retraining of one or more of the models of the raster digitization engine (155). For example, a developer may set up a periodic process to execute the retraining decision model (165) on the inputs and outputs to the raster digitization engine (155) to determine which, if any, of the raster segmentation model (158), the header segmentation (160), and the curve segmentation model (162) are to be retrained.

Although described within the context of a client server environment with servers and user devices, aspects of the disclosure may be practiced with a single computing system and application. For example, a monolithic application may operate on a computing system to perform the same functions as one or more of the applications executed by the servers (152) and the user devices A (180) and B (185) through N (190).

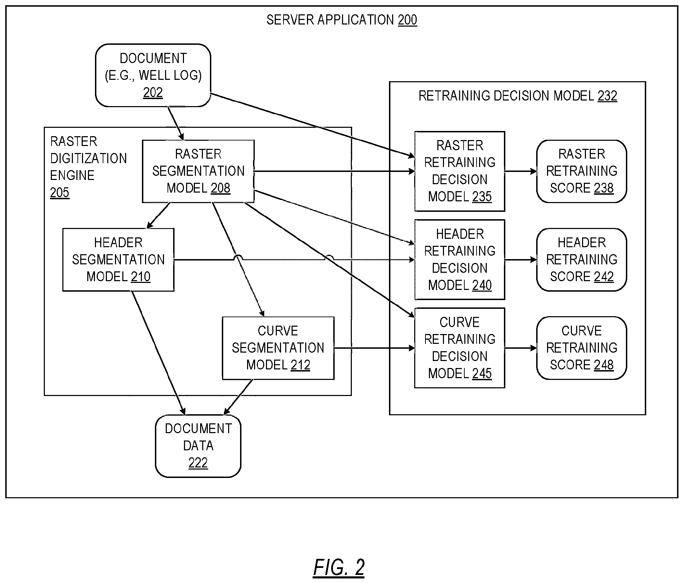

Turning to FIG. 2, the server application (200) may be an embodiment of the server application (152) of FIG. 1. Items in FIG. 2 that have the same name of items in FIG. 1 are examples of the like named item in FIG. 1. The server application (200) processes the document (202) with the raster digitization engine (205) to generate the document data (222). The server application (200) may also process the inputs and outputs of the machine learning models of the raster digitization engine (205), with the retraining decision model (232) to trigger the retraining of the machine learning models, utilized by the raster digitization engine (205).

The document (202) is a collection of data for processing with the raster digitization engine (205) by the server application (200). Document (202) is an example of document (105) in FIG. 1. In an example, the document (202) may be a well log. The document (202) may include multiple segments including headers and plots that are extracted by the raster digitization engine (205) into the document data (222). The document (202) may be input to the raster segmentation model (208) and be an input to the raster retraining decision model (235).

The raster digitization engine (205) is a component of the server application (200). The raster digitization engine (205) includes data with instructions that process the document (202) to generate the document data (222) using the raster segmentation model (208), the header segmentation model (210), and the curve segmentation model (212).

The raster segmentation model (208) is a component of the raster digitization engine (205). The raster segmentation model (208) includes data with instructions to process the document (202) to generate one or more types of masks for the one or more types of segments within the document (202). The output from the raster segmentation model (208) may be used as inputs to the header segmentation model (210), the curve segmentation model (212), the raster retraining decision model (235), the header retraining decision model (240), and the curve retraining decision model (245).

The header segmentation model (210) is a component of the raster digitization engine (205). The header segmentation model (210) includes data with instructions to process the document (202) with output from the raster segmentation model (208) to identify header segments from within the document (202). The output from the header segmentation model (210) may be used as an input to the header retraining decision model (240). The output from the header segmentation model (210) may include information within the document data (222), which may include information from header segments from the document (202).

The curve segmentation model (212) is a component of the raster digitization engine (205). The curve segmentation model (212) includes data with instructions to process the document (202) with output from the raster segmentation model (208). The curve segmentation model (212) may process the portion of the document (202) identified by the track area mask output by the raster segmentation model (208). The curve segmentation model (212) may generate a portion of the document data (222) that corresponds to data from within a curve from within the document (202).

The document data (222) is a component of the server application (200). The document data (222) includes information extracted from the document (202). In an example, the document data may include information extracted from headers of the document (202) and may include data from one or more curves from the document (202).

The retraining decision model (232) is a component of the server application (200). The retraining decision model (232) includes data with instructions to process the intermediate inputs and outputs of the raster digitization engine (205) to determine when to retrain the machine learning models of the raster digitization engine (205), including the raster segmentation model (208), the header segmentation model (210), and the curve segmentation model (212). The retraining decision model (232) processes information with the raster retraining decision model (235), the header retraining decision model (240), and the curve retraining decision model (245) to generate the raster retraining score (238), the header retraining score (242), and the curve retraining score (248), respectively.

The raster retraining decision model (235) is a component of the retraining decision model (232). The raster retraining decision model (235) includes data with instructions to process the inputs and outputs of the raster segmentation model (208) to generate the raster retraining score (238).

The raster retraining score (238) is stored on a component of the retraining decision model (232). The raster retraining score (238) identifies whether the raster segmentation model (208) should be retrained. The raster retraining score (238) may be generated from multiple samples of a data set.

The header retraining decision model (240) is a component of the retraining decision model (232). The header retraining decision model (240) includes data with instructions to process inputs and outputs of the header segmentation model (210) and generate the header retraining score (242).

The header retraining score (242) is stored on a component of the retraining decision model (232). The header retraining score (242) includes a value that identifies whether the header segmentation model (210) should be retrained. The header retraining score (242) may be generated from multiple samples of a data set.

The curve retraining decision model (245) is a component of the retraining decision model (232). The curve retraining decision model (245) includes data with instructions to process inputs and outputs of the curve segmentation model (212) and generate the curve retraining score (248).

The curve retraining score (248) is stored on a component of the retraining decision model (232). The curve retraining score (248) includes a value that identifies whether the curve segmentation model (212) should be retrained. The curve retraining score (248) may be generated from multiple samples of a data set.

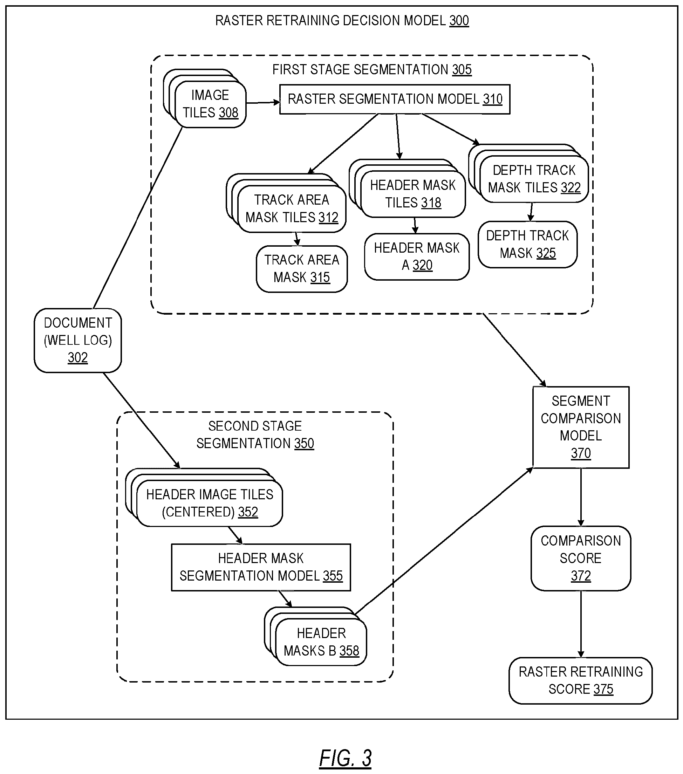

Turning to FIG. 3, the raster retraining decision model (300) is a component of a computing system. Items in FIG. 3 that have the same name of items in FIG. 1 are examples of the like named item in FIG. 1. The raster retraining decision model (300) may be an embodiment of the raster retraining decision model (168) of FIG. 1. The raster retraining decision model (300) processes information to determine the raster retraining score (375), which may be used to identify when the raster segmentation model (310) is to be retrained. In an embodiment, the decision to retrain may be applied to both the raster segmentation model (310) and to the header mask segmentation model (355). The raster retraining decision model (300) utilizes the first stage segmentation (305) and the second stage segmentation (350) to process the document (302) and generate the raster retraining score (375).

The document (302) is a document that may be processed with the raster retraining decision model (300) to generate the information to generate the raster retraining score (375), which may be used to identify when one or both of the raster segmentation model (310) and the header mask segmentation model (355) are to be retrained.

The document (302) is a document that may be processed with the raster retraining decision model (300) to generate the information to generate the raster retraining score (375). The document (302) may be a wells log with multiple headers, plots, and tracts formed as segments within the document (302).

The first stage segmentation (305) is a first workflow within the raster retraining decision model (300). The first stage segmentation (305) uses the raster segmentation model (310) to generate multiple classes of masks, including at least the header mask A (320).

The image tiles (308) are images generated by splitting up the document (302). The document (302) may be split up when the dimensions (*e.g*., the number of pixels) of an image generated from the document (302) is not be suitable for the raster segmentation model (310). The document (302) may be split into the image tiles (308), which are of a size that may be utilized by the raster segmentation model (310).

The raster segmentation model (310) is a component of the raster retraining decision model (300). The raster segmentation model (310) includes data with instructions to process the image tiles (308) and generate the track area mask (315) (stitched together from the track area mask tiles (312)), the header mask A (320) (stitched together from the header mask tiles (318)), and the depth track mask (325) (stitched together from the depth track mask tiles (322)). The output from the raster segmentation model (310) may have the same dimensionality as the input to the raster segmentation model (310) (*i.e.*, the image tiles (308)). The intermediate outputs (the track area mask tiles (312), the header mask tiles (318), and the depth track mask tiles (322)) from the raster segmentation model (310) generated from the input tiles (the images tiles (308)) may be stitched together to form the outputs of the raster segmentation model (310) (the track area mask (315), the header mask A (320), and the depth track mask (325)) that correspond to the document (302). The value in the pixels of the masks may identify whether a segment is present at the location of the pixel. The raster segmentation model (310) may be a machine learning model, which may include a neural network model, a convolutional neural network model, a transformer model, a recurrent neural network model, *etc.*

The track area mask tiles (312) are intermediate outputs from the raster segmentation model (310) The track area mask tiles (312) correspond to the image tiles (308) to identify track segments of the image tiles (308). The track area mask tiles (312) are combined to form the track area mask (315). The track area mask (315) is a mask that identifies the location of a track within the document (302).

The header mask tiles (318) are intermediate outputs from the raster segmentation model (310). The header mask tiles (318) correspond to the image tiles (308) and identify one or more header segments within the image tiles (308). The header mask tiles (318) may be combined to form the header mask A (320).

The header mask A (320) identifies one or more headers in the document (302). The header mask A (320) may be an input to the segment comparison model (370).

The depth track mask tiles (322) are intermediate outputs from the raster segmentation model (310). The depth track mask tiles (322) correspond to the image tiles (308) and identify a depth track area in the image tiles (308). The depth track area provides information about a depth measurement and may be a narrow vertical strip containing depth values. The depth track mask tiles (322) may be combined to form the depth track mask (325). The depth track mask (325) identifies the location of depth values for curve track area within the document (302).

The second stage segmentation (350) is a second workflow of the raster retraining decision model (300). The second stage segmentation model (350) processes the document (302) using the header mask segmentation model (355) to generate the header masks B (358).

The header image tiles (352) are collections of data stored in a component of the raster retraining decision model (300). The header image tiles (352) are images from the document (302) that include header segments as identified by the header mask A (320). The header image tiles (352) may be centered with respect to the location of the header within the header image tiles (352). A set of header image tiles may be generated for each header segment identified within the header mask A (320). The header image tiles within the set may be partially offset from each other. For example, a first header image tile may be above center (*e.g.*, by 10% or a number of pixels), a second header image tile may be centered, and a third image tile may be below center (*e.g.*, by a percentage or certain number of pixels). Different numbers of header image tiles may be used. The header image tiles (352) may be individually input to the header mask segmentation model (355).

The header mask segmentation model (355) is a component of the raster retraining decision model (300). The header mask segmentation model (355) processes the header image tiles (352) to generate the header masks B (358). The header mask segmentation model (355) may be a machine learning model, which may include a neural network model, a convolutional neural network model, a transformer model, a recurrent neural network model, *etc.*

The header masks B (358) are collections of data stored within a component of the raster retraining decision model (300). The header masks B (358) identify the location of headers within the header image tiles (352). The header masks B (358) may be input to the segment comparison model (370).

The segment comparison model (370) is a component of the raster retraining decision model (300). The segment comparison model (370) compares the header mask A (320) with the header masks B (358) to generate the comparison score (372). The segment comparison model (370) may align the header masks B (358) with the header mask A (320), determine the intersection over union between each of the header masks B (358) with the header mask A (320) and then combine the values for the intersections over unions. In an embodiment, the combination may be an average of the intersection over union values. The average may be compared to a threshold which may form the comparisons score (372). In an embodiment, the threshold may be 0.93 on a scale of 0 to 1. Other thresholds and scales may be used.

The comparison score is a collection of data stored on a component of the raster retraining decision model (300). The comparison score identifies whether the document (302) has been properly segmented with respect to the headers within the document (302). The comparison score (372) is for one sample (e.g., the document (302)) of a data set used to determine if the raster segmentation model (310) should be retrained.

The raster retraining score (375) is a collection of data stored on a component of the raster retraining decision model (300). The raster retraining score (375) may be generated from a collection of comparison scores that include the comparison score (372). The raster retraining score (375) may be a score for a data set of samples including the document (302), used to determine whether to trigger a retraining of the raster segmentation model which may include the raster segmentation model (310) and the header mask segmentation model (355).

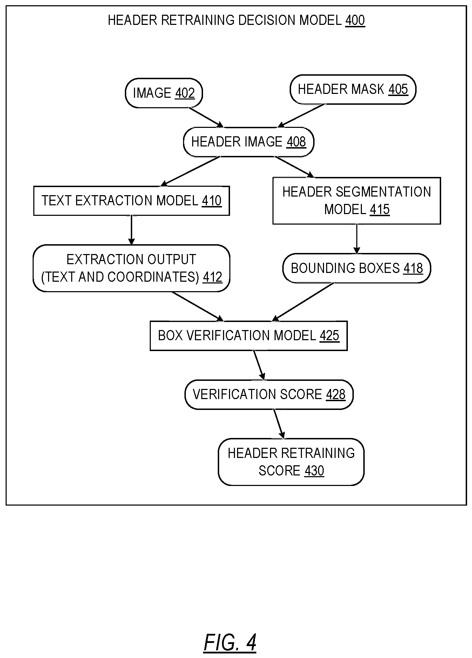

Turning to FIG. 4, the header retraining decision model (400) is a component of a computing system. Items in FIG. 4 that have the same name of items in FIG. 1 are examples of the like named item in FIG. 1. The header retraining decision model (400) may be an embodiment of the header retraining decision model (170), of FIG. 1. The header retraining decision model (400) determines the header retraining score (430) by processing the header image (408), which may be generated from the image (402) and the header mask (405).

The image (402) is a collection of data stored on a component of the header retraining decision model (400). The image (402) is a collection of data that may be an image tile from a document that contains a header segment.

The header mask (405) is a collection of data stored on a component of the header retraining decision model (400). The header mask (405) may be output from a raster segmentation model (e.g., the raster segmentation model (158) of FIG. 1) and may identify the location of a header within the image (402).

The header image (408) is a collection of data stored on a component of the header retraining decision model (400). The header image (408) may be generated by combining the image (402) with the header mask (405). In an embodiment, the header image (408) includes portions of the original image (402) that correspond to a header segment with the remaining portions of the image (402) masked out (e.g., set to zero (0)). The header image (408) may be input to the text extraction model (410) and to the header segmentation model (415).

The text extraction model (410) is a component of the header retraining decision model (400). The text extraction model (410) processes the header image (408) to generate the extraction output (412). The text extraction model (410) may use one or more optical character recognition (OCR) models, or machine learning models, to extract text from header image (408).

The extraction output (412) is the output from the text extraction model (410). The extraction output (412) is a collection of data that may be stored on a component of the header retraining decision model (400). The extraction output (412) may include text and coordinates for the text that are extracted from the header image (408). The text may be stored as strings of characters. The coordinates are location information that may include x and y coordinates for the text along with width and height dimensions for the text. In an embodiment, the coordinates may include two sets of x and y coordinates which may correspond to a bottom left corner and a top right corner of a rectangle or box that may surround the text identified from the header image (408). The extraction output (412) is an input to the box verification model (425).

The header segmentation model (415) is a component of the header retraining decision model (400). The header segmentation model (415) processes the header image (408) to generate the bounding boxes (418) for the header items within the header image (408).

The bounding boxes (418) are collections of data stored on a component of the header retraining decision model (400). The bounding boxes (418) are output from the header segmentation model (415) and identify the location of header items within the header image (408). A bounding box of the bounding boxes (418) may identify x and y coordinates for the header item. In an embodiment, two sets of x and y coordinates may be provided to identify corners of a rectangle. In an embodiment, one set of x and y coordinates may be provided with a length value and a width value to define the size of the bounding box. Each bounding box identified by one of the bounding boxes (418) may encompass multiple text items that correspond to the text within the extraction output (412). The bounding boxes (418) may be an input to the box verification model (425).

The box verification model (425) is a component of the header retraining decision model (400). The box verification model (425) processes the extraction output (412) with the bounding boxes (418) to generate the verification score (428). The box verification model (425) may determine the verification score (428) by determining whether each text item, from the extraction output (412), occurs within a single one of the bounding boxes (418). When the header segmentation model (415) operates properly, each text item from the extraction output (412) may occur in one of the text boxes (418). When the header segmentation model (415) is not operating properly, one or more of the text items from the extraction output (412) may occur in multiple ones of the bounding boxes (418). Additionally, if header segmentation is not operating properly, one or more of the text items from the extraction output may not appear in the bounding boxes (418).

The verification score (428) is a collection of data stored on a component of the header retraining decision model (400). The verification score (428) represents whether the header segmentation model (415) has properly identified the header items within the header image (408). In an embodiment, the verification score (428) may be the average of the determination for each text item as to whether the text item appears within a single one of the bounding boxes (418). For example, with four text items in which three of the text items occur in a single bounding box and one of the text items occurs within multiple bounding boxes, the verification score (428) may have a value of 0.75 (3 / 4 = 0.75). The verification score (428) is used to generate the header retraining score (430).

The header retraining score (430) is a collection of data stored by a component of the header retraining decision model (400). The header retraining score (430) consolidates multiple verification scores, including the verification score (428) for multiple header images (including the header image (408)) generated from multiple documents for a data set.

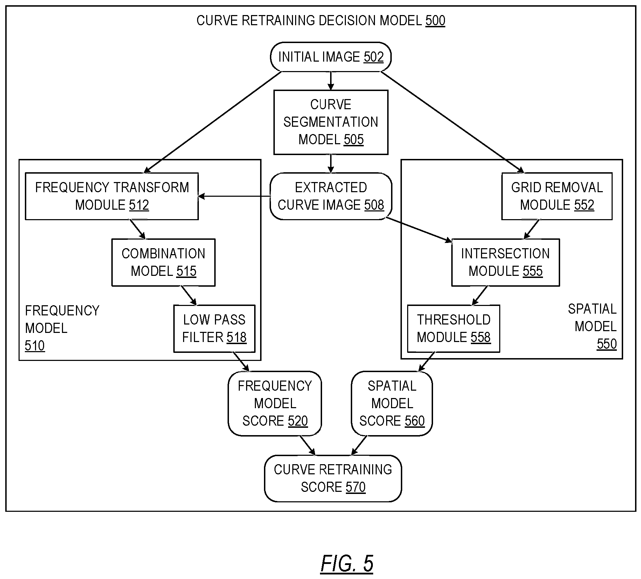

Turning to FIG. 5, the curve retraining decision model (500) is a component of a computing system. Items in FIG. 5 that have the same name of items in FIG. 1 are examples of the like named item in FIG. 1. The curve retraining decision model (500) may be an embodiment of the curve retraining decision model (172) of FIG. 1. The curve retraining decision model (500) determines the curve retraining score (570) from processing the initial image (502) and the extracted curve image (508).

The initial image (502) is a collection of data stored on a component of the curve retraining decision model (500). The initial image (502) is an image generated from a document that includes a curve. The initial image (502) is input to the curve segmentation model (505). The initial image (502) may be an input to the frequency transform module (512) of the frequency model (510) and an input to the grid removal module (552) of the spatial model (550).

The curve segmentation model (505) is a component of the curve retraining decision model (500). The curve segmentation model (505) processes the initial image (502) to generate the extracted curve image (508). The curve segmentation model (505) may utilize one or more machine learning models to process the initial image (502) and generate the extracted curve image (508). The machine learning models used by the curve segmentation model (505) may include neural network models, convolution neural network models, transformer models, recurrent neural network models, *etc.*

The extracted curve image (508) is a collection of data stored on a component of the curve retraining decision model (500). The extracted curve image (508) includes a curve identified from the initial image (502) without other segments from the initial image (502). The extracted curve image (508) may be an input to the frequency transform module (512) of the frequency model (510) and an input to the intersection module (555) of the spatial module (550).

The frequency model (510) is a component of the curve retraining decision model (500). The frequency model (510) processes the initial image (502) and the extracted curve image (508) using a frequency transform to generate the frequency model score (520). The frequency model (510) may include the frequency transform module (512), the combination model (515), and the low pass filter (518) to generate the frequency model score (520).

The frequency transform module (512) is a component of the frequency model (510). The frequency transform module (512) performs a frequency transform on an image input to the frequency transform module (512) to convert the data in the image from a spatial domain to data in a frequency domain. In an embodiment, the frequency transform module (512) may perform a Fourier transform on the input to generate a frequency output. The output from the frequency transform module (512) identifies the frequencies present in the image input to the frequency transform module (512). For example, the initial image (502) and the extracted curve image (508) may be individually input to the frequency transform module (512). In response to an input image (in a spatial domain), the frequency transform module (512) outputs the frequencies present in the input image in a data structure referred to as a frequency spectrum (which is in the frequency domain). For example, responsive to the initial image (502), the frequency transform module (512) may output an initial frequency spectrum that represents the frequencies present in the initial image (520). Responsive to the extracted curve image (508), the frequency transform module (512) may output an extracted curve frequency spectrum that represents the frequencies present in the extracted curve image (508). The initial frequency spectrum and the extracted curve frequency spectrum that are output from the frequency transform module (512) may be inputs to the combination model (515).

The combination model (515) is a component of the frequency model (510). The combination model (515) processes outputs from the frequency transform module (512). As an example, the combination model (515) may subtract the frequencies represented in the extracted curve frequency spectrum (generated from the extracted curve image (508)) from the frequencies represented in initial frequency spectrum (generated from the initial image (502)) to form a resultant frequency spectrum. The resultant frequency spectrum may be stored in a data structure referred to as a subtracted frequency spectrum, which may be the output of the combination model (515). The subtracted frequency spectrum output from the combination model (515) stores the resultant frequency spectrum generated by the combination model (515) and may be input to the low pass filter (518).

The low pass filter (518) is a component of the frequency model (510). The low pass filter (518) removes high frequency components from the input to the low pass filter (518). The low frequency signals correspond to the curve that is to be extracted from the initial image (502).

When the curve segmentation model (505) properly extracts the curve from the initial image (502) into the extracted curve image (508), then the extracted curve frequency spectrum (generated from the extracted curve image (508)) should include low frequency signals that correspond to low frequency signals in the initial frequency spectrum (generated from the initial image (502)). The subtraction of the frequencies of extracted curve image from the frequencies of initial image (502) should remove the low frequency signals from the output of the combination model (515), which is the subtracted frequency spectrum that is input to the low pass filter (518). When the output from the combination model (515), the subtracted frequency spectrum, does not include low frequency signals (i.e., when the curve segmentation model (505) properly extracted the curve from the initial image (502)) then the output of the low pass filter (518) may have no low frequency signals and no high frequency signals. In contrast, when the subtracted frequency spectrum output from the combination model (515) does include low frequency signals (when a curve segmentation model (505) did not properly extract the curve from the initial image (502)), then the output of the low pass filter (518) will include low frequency signals. The presence, or lack thereof, of the low frequency signals in the output of the low pass filter (518) may be used to form the frequency model score (520).

The frequency model score (520) is a collection of data stored on a component of the curve retraining decision model (500). The frequency model score (520) identifies whether the curve segmentation model (505) properly extracted the curve from the initial image (502) into the extracted curve image (508). In an embodiment, the frequency model score (520) for the initial image (502) may be a binary value with a value based on whether the output of the low pass filter (518) includes low frequency signals. In an embodiment, the frequency model score (520) may have a value of zero (0) when the output of the low pass filter (518) includes low frequency signals and may have a value of one when the output of the low pass filter (518) does not include low frequency signals. The frequency model score (520) may be used to determine the curve retraining score (570).

The spatial model (550) is a component of the curve retraining decision model (500). The spatial model (550) processes the initial image (502) and the extracted curve image (508) to generate the spatial model score (560). In an embodiment, the spatial model (550) uses the grid removal module (552), the intersection module (555), and the threshold module (558) to process the initial image (502) and the extracted curve image (508) to generate the spatial model score (560).

The grid removal module (552) is a component of the spatial model (550). The grid removal module (552) processes the initial image (502) to remove gridlines from the initial image (502). The gridlines are lines in the image that form a grid over which a curve is superimposed to quantify the data within the curve. For example, one set of gridlines (vertical or horizontal) may identify a well depth and another set of gridlines (perpendicular to the first set) may identify the magnitude of the measurement for the given curve. The gridlines may divide the image into smaller, regularly spaced sections. The output of the grid removal module (552) is a gridless image (*i.e*., an image not having gridlines) that is input to the intersection module (555).

The intersection module (555) is a component of the spatial model (550). The intersection module (555) receives as input the extracted curve image (508) and the output from the grid removal module (552). The intersection module (555) determines the intersection between the output from the grid removal module (552) and the extracted curve image (508). In an embodiment, the output of the intersection module (555) is an intersection value that identifies the intersection between the curve from the gridless image output from the grid removal module (552) and the curve within the extracted curve image (508). The intersection value output from the intersection module (555) is an input to the threshold module (558).

The threshold module (558) is a component of the spatial module (550). The threshold module (558) determines the spatial model score (560) from the intersection value output from the intersection module (555). In an embodiment, the threshold module (558) applies a threshold to the intersection value output from the intersection module (555). For example, the threshold may be 90%, which may be satisfied when 90% of the pixels that correspond to the curve in the gridless image output from the grid removal module (552) correspond to pixels from the curve from the extracted curve image (508). The output from the threshold module (558) may be a binary value that forms the spatial model score (560).

The spatial model score (560) is a collection of data that is stored on a component of the curve retraining decision model (500). The spatial model score (560) is the output of the spatial model (550) and identifies whether the curve segmentation model (505) has properly extracted the curve from the initial image (502) into the extracted curve image (508). As an example, the value of the spatial model score (560) may be set to zero (0) when the intersection value from the intersection module (555) is below the threshold from the threshold module (558) and the value of the spatial model score (560) may be set to one (1) when the intersection value output from the intersection module (555) is greater than the threshold of the threshold module (558).

The curve retraining score (570) is a collection of data stored on a component of the curve retraining decision model (500). The curve retraining score (570) is generated for a data set of multiple samples in which one of these samples may be the initial image (502). In an embodiment, the curve retraining score (570) may be the average of the frequency model scores (including frequency model score (520)) and the spatial model scores (including the spatial model score (560)) generated for the samples (including the initial image (502)) of the data set.

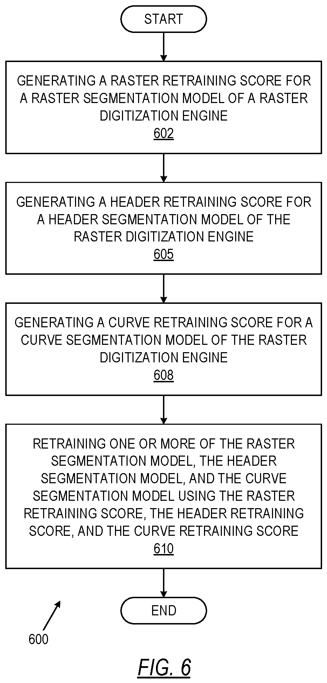

FIG. 6 shows a flowchart of a method for determining when to retrain raster digitization components. The methods of FIG. 6 may be implemented using the systems and components of FIG. 1 through FIG. 5, and one or more of the steps may be performed on, or received at, one or more computer processors. In an embodiment, a system may include at least one processor and an application that, when executing on the at least one processor, performs the method. In an embodiment, a non-transitory computer readable medium may include instructions that, when executed by one or more processors, perform the method. The outputs from various components (including models, functions, procedures, programs, processors, *etc.*) from performing the method may be generated by applying a transformation to inputs using the components to create the outputs without using mental processes or human activities.

Turning to FIG. 6, the process (600) determines when to retrain raster digitization components of a raster digitization engine. The process (600) may make the retraining determination using the inputs and outputs of the existing models without the additional machine learning or deep learning complexity that comes with creating large and complex models to generate the data used to make retraining decisions. The process (600) may operate on computing systems as described with FIG. 15A and FIG. 15B.

Block 602 includes generating a raster retraining score for a raster segmentation model of a raster digitization engine. In an embodiment, the raster retraining score is generated from the inputs and outputs to the raster segmentation model of the raster digitization engine.

In and embodiment, ensemble methods may be used to generate each of the raster retraining score, the header retraining score, curve retraining score. The ensemble methods may use an ensemble of outputs to generate a corresponding score. For the raster retraining score, an ensemble of outputs from a first stage segmentation and from a second stage segmentation may be compared to form the raster retraining score and used to determine whether to retrain the raster segmentation model. For the header retraining score, an ensemble of outputs from text extraction and bounding box identification may be compared to form the header retraining score and used to determine whether to retrain the header segmentation model. For the curve retraining score, an ensemble of outputs from the raster digitization engine, from curve segmentation using background grid suppression using spatial domain information, and from background grid suppression using frequency domain information, may be compared. If the ensemble of outputs are not consistent, then the curve segmentation model from the raster digitization engine may be retrained.

In an embodiment, generating the raster retraining score may include executing a raster segmentation model of a first stage of a raster segmentation model to generate multiple masks, including a first header mask. In an embodiment, the first stage may split a document into image tiles that are processed by the raster segmentation model to generate mask tiles that may be assembled into masks. The document may be converted to an image that may be too large for the raster segmentation model. The image of the document may be split to the image tiles. The image tiles may be created with a fixed resolution for each image tile and the image tiles may or may not overlap. Different types of mask tiles corresponding to the image tiles may be generated to form different types of masks, including track area mask tiles, header mask tiles, and depth track mask tiles that may be assembled to form a track area mask, a header mask, and a depth track mask.

In an embodiment, generating the raster retraining score includes executing a header mask segmentation model of a second stage of a raster segmentation model to generate a second header mask. Multiple header image tiles centered around a header item from a header segment from a document may be input to the header mask segmentation model. The header mask segmentation model generates the header mask for each of the header image tiles centered around the header item. In an embodiment, the header mask segmentation model may include a neural network model with one or more types of one or more layers to process the input (the header image tiles) and generate the output (the header masks).

In an embodiment, generating the raster retraining score includes executing a segment comparison model using the first header mask with the second header mask to generate a comparison score. The segment comparison model may perform an intersection over union operation between the header mask generated from the raster segmentation model (a first stage) and the header masks generated from the header mask segmentation model (a second stage). In an embodiment, the intersection over union operation divides the area of intersection by the area of union between two of the masks. The area of intersection is the area between two masks that are both true (*e.g.*, both masks have a value of "1") (which in this case indicates that the area includes a header segment), which may be analogous to a logical AND operation. The area of union is the area between the two masks in which either mask is true, which may be analogous to a logical OR operation.

In an embodiment, the intersection over union values for multiple masks from the header mask segmentation model that are compared to the header mask from the raster segmentation model may be averaged. The averaged value may then be compared to a threshold to form a comparison score. For example, the threshold 0.93 on a scale of 0 to 1 may be used in which an averaged value that is over the threshold may correspond to a comparison value of one (1) and an averaged value that is not over the threshold may correspond to a comparison value of zero (0). A comparison value of 1 may indicate that no retraining is to be performed for the raster segmentation model and a comparison value of zero (0) may trigger retraining of the raster segmentation model.

In an embodiment, generating the raster retraining score includes generating a raster retraining score from the comparison score for a raster segmentation model of a raster digitization engine. In an embodiment, the raster retraining score may be an average of comparison scores for the samples from a data set processed with the raster retraining decision model.

Block 605 includes generating a header retraining score for a header segmentation model of the raster digitization engine. In an embodiment, generating the header retraining score includes executing a text extraction model using a header image to generate extraction output that includes text items and location coordinates for each of the text items. The text extraction model may include optical character recognition (OCR) algorithms and machine learning algorithms.

Optical character recognition algorithms operate by converting images of text into machine-encoded text. The process may start with preprocessing steps that include noise reduction and normalization to enhance the image quality and make the text in the image clearer. Text detection and text recognition may then be performed. With text detection, the regions within the image that contain text are identified, which may be done using techniques that include edge detection, contour analysis, and machine learning models that are trained to distinguish text areas from non-text.

Once the text regions are detected, an optical character recognition algorithm may proceed to the text recognition phase. Text recognition involves splitting the detected text regions into individual characters or words, which are then recognized. Pattern recognition techniques may be used that compare the segments to a database of known character shapes. Neural networks trained on vast amounts of labeled data may be used to recognize characters and words using recurrent neural networks (RNNs), convolutional neural networks (CNNs), *etc.*

The location of the text may be extracted by identifying text item bounding boxes that surround the detected text regions, words, characters, *etc.* The text item bounding boxes include coordinates that define the position and size of the text in the initial image.

The text extraction may be decoupled from the identification of bounding boxes for header items. By being decoupled, the text extraction may be performed prior to bounding box identification for header items.

In an embodiment, generating the header retraining score includes executing a header segmentation model using the header image to generate a set of bounding boxes. The set of bounding boxes may include none, one, or multiple bounding boxes. Executing a header segmentation model involves processing a header image to identify and generate bounding boxes around the header items within the header image. The segmentation model may be a machine learning model based on advanced deep learning architectures, like convolutional neural networks (CNNs), fully convolutional networks (FCNs), vision transformers, *etc.* The segmentation model may analyze the image to detect different areas of interest, such as titles, dates, measurements, *etc.*, that may be within a header item, which may be within a header, which may be within the header image.

The segmentation model may identify regions of the header image that correspond to a header item and generate coordinates for bounding boxes that surround one or more header items. Each bounding box may include coordinates that identify the position and size of the header items within the header image. In an embodiment, bounding box coordinates may include two sets of x and y coordinates to identify opposing corners of the bounding box. In an embodiment, the bounding box coordinates may include a set of x, y, height, and width values to identify the location and size of the bounding box within the image.

In an embodiment, generating the header retraining score includes executing a box verification model using the location coordinates and the set of bounding boxes to generate a verification score. For each of the text items found within the header image, 408, a determination is made as to whether the text item is present in either one bounding box or is present in none or multiple bounding boxes. Each of the text items should only be present in one of the bounding boxes for the header items. In an embodiment, the verification score may be determined by applying a threshold to the quotient of a value that identifies the number of text items that are present within one of the bounding boxes for the header items divided by a value that identifies the total number of text items within the header image. For example, with a threshold of 0.95 on a scale of 0 to 1 and a total number of text items of 50, then the verification score may be set to one (1) when the number of text items within a single box is 48 or more and set to zero (0) when the number of text items within a single box is 47 or fewer.

In an embodiment, generating the header retraining score includes generating a header retraining score from the verification score for a header segmentation model of the raster digitization engine. In an embodiment, the header retraining score may be generated as an average of multiple verification scores for the header images of samples from a data set. Each of the samples may be a document.

Block 608 includes generating a curve retraining score for a curve segmentation model of the raster digitization engine. The curve retraining score may be generated from multiple samples of a data set and identify whether the curve segmentation model is to be retrained. The curve retraining score may be generated by comparing an initial image to an extracted curve image generated by the curve segmentation model from the initial image. The curve segmentation model may be a machine learning model that receives the initial image as an input and outputs the extracted curve image, which may have the same dimensions as the initial image. Different methods may be used and compared to determine the curve retraining score.

In an embodiment, generating the curve retraining score includes executing a frequency model using an initial image and an extracted curve image to generate a frequency model score. The frequency model may perform a frequency transformation on the initial image and the extracted curve image to convert the image data from a spatial domain to a frequency domain. The output of the frequency transformation may be an initial frequency spectrum that corresponds to the initial image and an extracted frequency spectrum that corresponds to the extracted curve image. The data in the frequency spectrums may include values represented with complex numbers to represent the magnitude and phase components of the frequencies present.

The curve frequency spectrum may be combined with the initial frequency spectrum. For example, the curve frequency spectrum may be subtracted from the initial frequency image to generate a subtracted frequency spectrum. When the curve segmentation model operates properly, the curve frequency spectrum may have low frequency signals that correspond to and cancel out the low frequency signals within the initial frequency spectrum when the initial frequency spectrum and the curve frequency spectrum are combined to form the subtracted frequency spectrum.

The subtracted frequency spectrum may be passed through a low pass filter to remove high frequency signals present in the subtracted frequency spectrum. If the output from the low pass filter includes low frequency signals, then the low frequency signals from the extracted curve image did not cancel out the low frequency signals from the initial image, which may indicate that the curve segmentation model may be retrained.

The output of the low pass filter may form the frequency model score. In an embodiment, if the output of the lowpass filter does not include low frequency signals, then the frequency model score may be set to one (1) (indicating that the model is properly trained). Otherwise, the frequency model score may be set to zero (0) (indicating that the model is not properly trained and may be retrained).

In an embodiment, generating the curve retraining score includes executing a spatial model using the initial image and the extracted curve image to generate a spatial model score. In an embodiment, the spatial model may process the initial image and the extracted curve image with a grid removal module, an intersection module, and a threshold module. In an embodiment, the initial image may be converted to a black and white image. The black and white image may have a black background color and a white foreground color. Items in the foreground color may include a curve and grid lines from the document from which the initial image was generated.

The grid removal module may process the initial image to remove a grid from the initial image. To remove the grid, each of the rows and columns of pixels within the initial image are processed to determine the average number of foreground pixels per row and per column. If the number of foreground pixels in a row (or column) is twice the average number of foreground pixels per row (or column) then the row (or column) of pixels may be set to the background color. The grid removal process removes the grid from the initial image and may also remove portions of the curve that coincide with the lines of the grid to form a gridless image.

The intersection module may process a gridless image with the extracted curve image to identify the area of intersection between the gridless image and the extracted curve image. In an embodiment, the intersection between the gridless image and the extracted curve image is the number of pixels that are in the same row and column and are set to the foreground color. In an embodiment, the number of intersecting pixels may be divided by the total number of foreground pixels in the gridless image to generate a normalized intersection value.

The threshold module may process the intersection value. In an embodiment, if the normalized intersection value is above an intersection threshold, then the spatial model score for the initial image may be set to one (1) for the initial image. Otherwise, the spatial model score may be set to zero (0) for the initial image. In an embodiment, the intersection threshold may be 0.99 on a scale of 0 to 1, though other values may be used.

In an embodiment, generating the curve retraining score includes generating the curve retraining score from a frequency model score and a spatial model score for a curve segmentation model of a raster digitization engine. In an embodiment, the frequency model score and the spatial model score may be binary values combined with a logical AND to generate a single value for whether the curve segmentation model should be retrained based on the initial image. The frequency model scores and the spatial model scores for multiple samples (including the initial image) of a data set may be averaged together to generate the curve retraining score. In an embodiment, the curve retraining score may be generated by averaging the logical AND of the individual frequency model scores and spatial model scores for the samples of the data set.

Block 610 includes retraining one or more of the raster segmentation model, the header segmentation model, and the curve segmentation model using the raster retraining score, the header retraining score, and the curve retraining score. In an embodiment, after processing the samples of a data set to determine the raster retraining score, the header retraining score, and the curve retraining score, independent decisions may be made based on each of the scores. Each score may be compared against a common threshold or an individual threshold to determine whether to retrain the corresponding model. The common threshold may be used for multiple models. Individual thresholds may be used for individual models. As an example, with a common threshold of 0.92 on a scale of 0 to 1 for each of the scores, an additional individual threshold of 0.93 may be used for the curve retraining score. If the score, satisfies the threshold (e.g., the score is below 0.92) then retraining of the corresponding model may be triggered. Higher scores (closer to 1) may indicate better performance of the model and lessen the likelihood of retraining the model. Otherwise, the corresponding model may not be retrained. Controlling the retraining of the models of the system in this manner reduces the amount of computing sources used to train the models to improve the technology of machine learning models and corresponding systems.

In an embodiment, retraining one or more of the raster segmentation model, the header segmentation model, and the curve segmentation model is further based on a membership attack inference determination and includes determining the presence of user data within training data used to train the one or more of the raster segmentation model, the header segmentation model, and the curve segmentation model to form the membership attack inference determination. Systems may have multiple users. Each user may have private data that is not to be shared with the other users of the system. The training data may include public data that is shared between all users. The public data may be similar to the private data of a user.

A membership attack inference determination may be generated by comparing the user data to the training data to determine the similarity of the user data to the training data. When sufficiently similar (i.e., satisfying a threshold), the user data may be interpreted as a member of the training data even when the user data is not explicitly included in the training data. The comparison may be performed by generating the scores (e.g., the raster retraining score, the header retraining score, and the curve retraining score) from the user data and comparing the scores to thresholds (e.g., a raster retraining threshold, a header retraining threshold, and a curve training threshold). The scores of multiple samples may be averaged for the determination of whether the user data is a member of and represented by the training data. The comparison of training and user data by finding scores above may be an indirect comparison of the training and user data. This indirect comparison may be performed without requiring additional machine learning models.

A membership attack inference determination may be generated by comparing (*e.g*., directly) the user data to the training data to determine the similarity of the user data to the training data. The similarity of user and training data may be determined by comparing samples from the user data to samples from the training data using similarity algorithm (*e.g*., cosine similarity) and averaging the number of samples from the user data weighted by similarity score. In the case of no access to training data, synthetic data may be first generated which is similar to the training data and then compared with user data. The comparison of user and training data directly may include the use of additional machine learning models to generate the synthetic data.

In an embodiment, retraining one or more of the raster segmentation model, the header segmentation model, and the curve segmentation model is further based on a membership attack inference determination and includes retraining the one or more of the raster segmentation model, the header segmentation model, and the curve segmentation model when the membership attack inference determination indicates the user data is not within the training data. When the membership attack inference determination satisfies the threshold (*e.g*., the weighted similarity meets or exceeds a similarity threshold), then the user data is inferred to be a member of the training data and the model may not be retrained. The model may not be retrained since additional training may not improve results. When the membership attack inference determination does not satisfy the threshold, then the user data is inferred to not be a member of the training data and the model may be retrained.

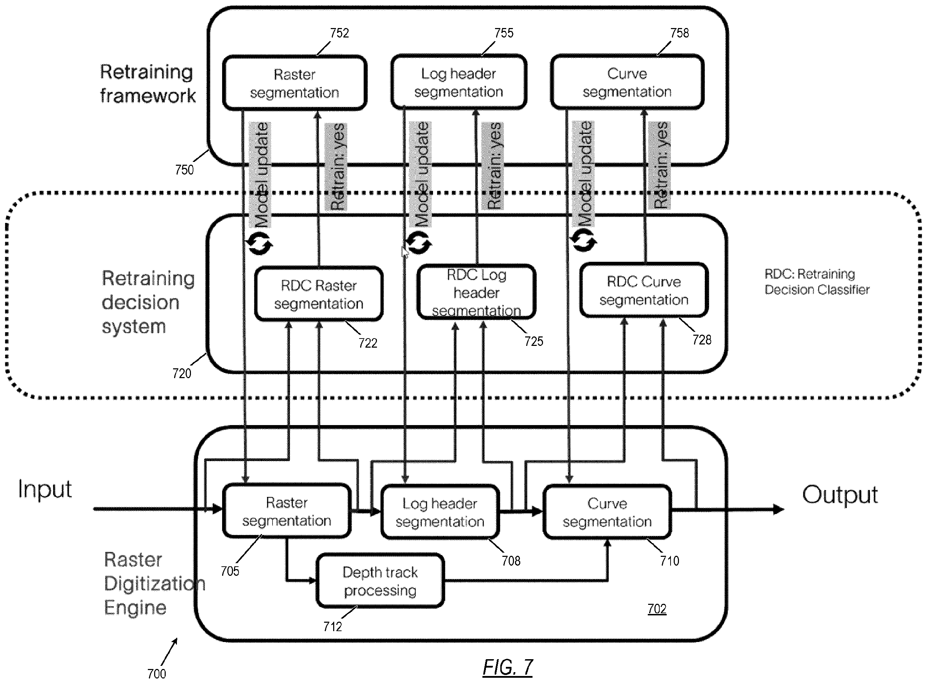

Turning to FIG. 7, the system (700) is a computing system with multiple components with memories and processors to store and execute data with instructions. The system (700) utilizes the components to process images to extract information using the raster digitization engine (702), determine whether to retrain the components of the raster digitization engine (702) with the retraining decision system (720), and retrain the components of the raster digitization engine (702) with the retraining framework (750).

The raster digitization engine (702) is a component of the system (700). The raster digitization engine (702) includes multiple components to process input images and extract data from the images as output. The images may be documents with multiple segments of data. The documents may be well logs with geophysical measurements and metadata within the segments. The raster digitization engine (702) includes the raster segmentation component (705), the log header segmentation component (708), the curve segmentation component (710), and the depth track processing component (712).

The raster segmentation component (705) is a raster segmentation model that includes one or more machine learning models. The raster segmentation component (705) receives input that includes an image used to generate output. The output may include masks for the different segments of data within the image, including masks for headers, track areas, and depth tracks, used by the log header segmentation component (708), the curve segmentation component (710), and the depth track processing component (712). The inputs and outputs to the raster segmentation component (705) may be inputs to the retraining decision classifier (RDC) of the raster segmentation component (722). The models of the raster segmentation component (705) may be replaced with the raster segmentation component (752) after being retrained by the retraining framework (750).

The log header segmentation component (708) is a header segmentation model that includes one or more machine learning models. The log header segmentation component (708) receives input that includes output from the raster segmentation component (705), which may be a mask that identifies a header segment of the initial input image. The log header segmentation component (708) outputs data extracted from a header of the image in which the header of the image is obtained using the header mask identified by the raster segmentation component (705). The inputs and outputs to the log header segmentation component (708) are inputs to the RDC log header segmentation component (725). The models of the log header segmentation component (708) may be replaced with the log header segmentation component (755) after being retrained by the retraining framework (750).

The curve segmentation component (710) is a curved segmentation model that includes one or more machine learning models. The curve segmentation component (710) receives input that includes output from the raster segmentation component (705), which may be a mask that identifies a curve segment of the initial input image. The curve segmentation component (710) outputs data extracted from a curve of the image using the track area mask identified by the raster segmentation component (705). The inputs and outputs to the curve segmentation component (710) are inputs to the RDC curve segmentation component (728). The models of the curve segmentation component (710) may be replaced with the curve segmentation component (758) after being retrained by the retraining framework (750).

The depth track processing component (712) receives output from the raster segmentation component (705) that may identify information within a depth track of the initial image. The output of the depth track processing component (712) maybe an input to the curve segmentation component (710).

The retraining decision system (720) is a component of the system (700). The retraining decision system (720) includes multiple components to determine when to retrain the models of the components of the raster digitization engine (702). The training decisions for the different components of the raster digitization engine (702) are executed and reached independently so that the models may be retrained individually instead of together to use fewer computational resources during training and retraining. The retraining decision system (720) includes the RDC raster segmentation component (722), the RDC log header segmentation component (725), and the RDC curve segmentation component (728).

The RDC raster segmentation component (722) is a component of the retraining decision system (720). The RDC raster segmentation component (722) receives inputs that are the inputs and outputs to the raster segmentation component (705). The RDC raster segmentation component (722) processes the input to generate output that is used to identify when to retrain the raster segmentation component (705). The output of the RDC raster segmentation component (722) is an input to the retraining framework (750) for the raster segmentation component (752).

The RDC log header segmentation component (725) is a component of the retraining decision system (720). The RDC log header segmentation component (725) receives inputs that are the inputs and outputs to the log header segmentation component (708). The RDC log header segmentation component (725) processes the input to generate output that is used to identify when to retrain the log header segmentation component (708). The output of the RDC log header segmentation component (725) is an input to the retraining framework (750) for the log header segmentation component (755).

The RDC curve segmentation component (728) is a component of the retraining decision system (720). The RDC curve segmentation component (728) receives inputs that are the inputs and outputs to the curve segmentation component (710). The RDC curve segmentation component (728) processes the input to generate output that is used to identify when to retrain the curve segmentation component (710). The output of the RDC curve segmentation component (728) is an input to the retraining framework (750) for the curve segmentation component (758).

The retraining framework (750) is a component of the system (700). The retraining framework (750) includes multiple components used to retrain the models used by the raster digitization engine (702). The retraining framework (750) may include the raster segmentation component (752), the log header segmentation component (755), and the curve segmentation component (758), which may be retrained versions of the components of the raster digitization engine (702).

The raster segmentation component (752) is a component of the retraining framework (750). The raster segmentation component (752) may be a retrained version of the raster segmentation component (705) of the raster digitization engine (702). The training of the raster segmentation component (752) may be triggered by the output from the RDC raster segmentation component (722) of the retraining decision system (720).

The log header segmentation component (755) is a component of the retraining framework (750). The log header segmentation component (755) may be a retrained version of the log header segmentation component (708) of the raster digitization engine (702). The training of the log header segmentation component (755) may be triggered by the output from the RDC log header segmentation component (725) of the retraining decision system (720).

The curve segmentation component (758) is a component of the retraining framework (750). The curve segmentation component (758) may be a retrained version of the curve segmentation component (710) of the raster digitization engine (702). The training of the curve segmentation component (758) may be triggered by the output from the RDC curve segmentation component (728) of the retraining decision system (720).

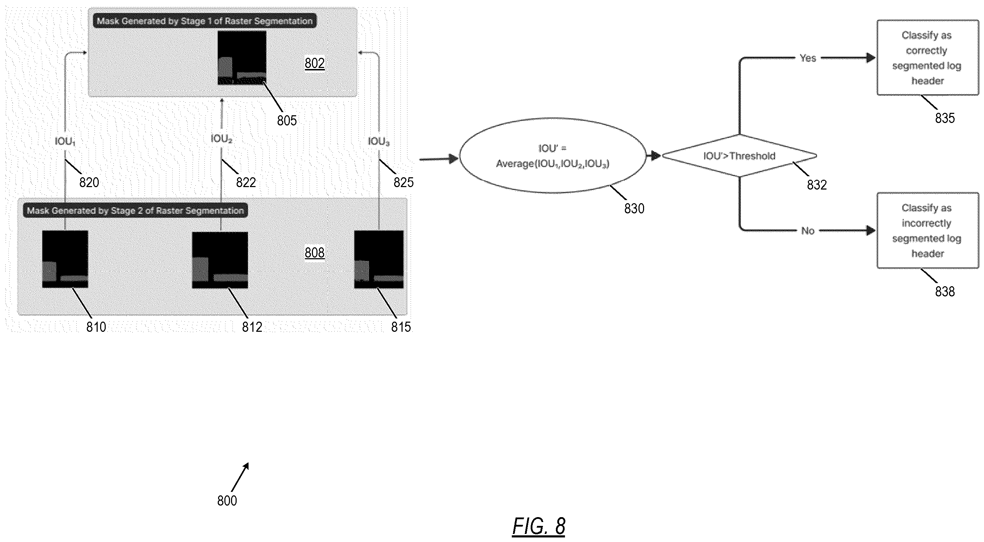

Turning to FIG. 8, the workflow (800) operates on a retraining decision system. The workflow (800) includes the Blocks 1102 through 1138 that perform steps of a process to generate information used to determine whether to retrain a raster segmentation component.

Block 802 includes generating a mask with a first stage of a raster segmentation component. The first stage generates the mask (805) that is a compilation of multiple masks for different segments of an image. One of the multiple masks is a header mask that identifies the location of one or more headers in the initial image.

Block 808 includes generating multiple second masks (810), (812), and (815) with a second stage of a raster segmentation component. The second stage may differ from the first stage in that the second stage generates the second masks (810), (812), and (815) for header items but not for other types of data. Each of the second masks (810), (812), and (815) may correspond to the same header items identified in the mask (802) from the first stage. Additionally, each of the second masks may be offset (horizontally or vertically) with respect to each other. An intersection over union operation is performed between each of the second masks (810), (812), and (815) and the mask (802) to form multiple intersection over union values.

Block 830 includes combining the multiple intersection over union values generated from the second masks (810), (812), and (815) and the mask (802). In an embodiment, the combination is an average of the multiple intersection over union values to form an average intersection over union value.

Block 832 includes applying a threshold to the average intersection over union value. When the average intersection over union value satisfies the threshold, then the workflow (800) proceeds to Block 835, otherwise, the workflow (800) proceeds to Block 838.

Block 835 includes classifying the output of the first and second segmentation stages as being correct. The output is correct when the mask from the first stage is sufficiently similar to the second stage masks such that, effectively, the methods used by the first stage and by the second stage of the header segmentation component agree on the location of the header items within the original image.

Block 838 includes classifying the output of the first and second segmentation stages as being incorrect. The output of the first and second segmentation stages is incorrect when the mask from the first stage is not sufficiently similar to the second masks, indicating that the methods used by the first and second stages disagree on the location of the header items within the original image.

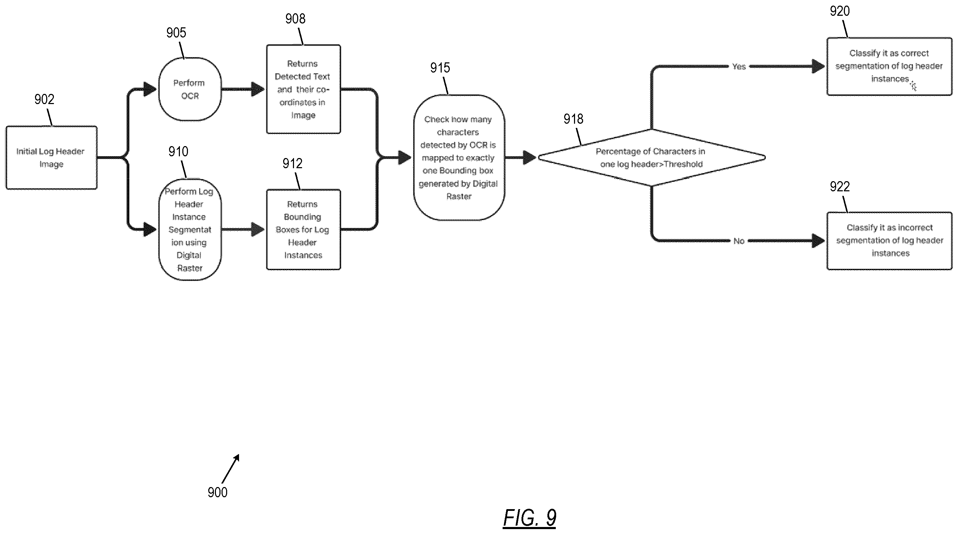

To FIG. 9, the workflow (900) illustrates an embodiment of a retraining decision system for determining when to retrain a header segmentation component. The workflow (900) includes the Blocks 902 through 922 that perform steps of a process to generate information used to determine whether to retrain a header segmentation component.

Block 902 includes receiving an initial header image, which may include a log header from a well log. The header image be extracted from a document, which may be a well log.

Block 905 includes performing optical character recognition (OCR) on the header image. The optical character recognition may include preprocessing, text recognition, and post processing.

Preprocessing processes the image prior to the performance of optical character recognition. Preprocessing may include noise reduction to remove noise from the header image, binarization to convert the image to a background color and a foreground color (*e.g.*, black and white), deskewing to correct a tilt of the header image, *etc.*

Text recognition may include pattern recognition and feature extraction. Pattern recognition compares the header image with a database of known characters to identify the characters within the header image. Feature extraction may identify features of each character, which may include lines, curves, intersections, *etc.*, to recognize the characters within the header image. Different types of algorithms may be used to perform text recognition, including mathematical algorithms and machine learning algorithms.

Post processing may improve the accuracy of the recognized text. Post processing may include contextual correction, spell checking, and grammar checking. Contextual correction may use a language model or dictionary to correct misrecognized words based on context. Spell checking may identify and correct spelling errors. Grammar checking may identify and correct errors with regards to grammatical rules.

Block 908 includes the output of Block 905, which is the output of the optical character recognition. The output of the optical character recognition may include the text recognized from the header image and the coordinates of the location of the text from within the header image.

Block 910 includes performing header instance segmentation, which may be performed with a header segmentation component. Execution of the header instance segmentation generates bounding boxes for the header items (which may be referred to as header instances) within the header image.

Block 912 includes the output of Block 910, which are the bounding boxes generated by the header segmentation component. The bounding boxes identify the location and size of the header items (also referred to as header instances) within the header image.

Block 915 includes determining the number of characters detected during the optical character recognition of Block 905 that are mapped to the location of a single bounding box detected at Block 910. The location of each character may be compared to the location of each bounding box to determine whether each character is within none, one, or multiple bounding boxes.

Block 918 includes comparing the percentage of characters that are in the bounding box of a single header item to a threshold. For example, a threshold of 0.98 would have that 98% of the characters recognized in the header image have one-to-one correspondence to a single bounding box of a single header item to satisfy the threshold. Each character may be in a single bounding box and each bounding box may include multiple characters. When satisfied, the process proceeds to Block 920. Otherwise, the process proceeds to Block 922.

Block 920 includes classifying the output as a correct segmentation. In other words, when the number of one-to-one correspondence from characters to single bounding boxes (instead of to multiple bounding boxes) is greater than (or equal to) the threshold, then the header segmentation component is executing with acceptable accuracy.

Block 922 includes classifying the output as an incorrect segmentation. In other words, when the number of characters that corresponds to one bounding box is less than the threshold, then the header segmentation component is not executing with acceptable accuracy since too many characters correspond with multiple bounding boxes for multiple header items.

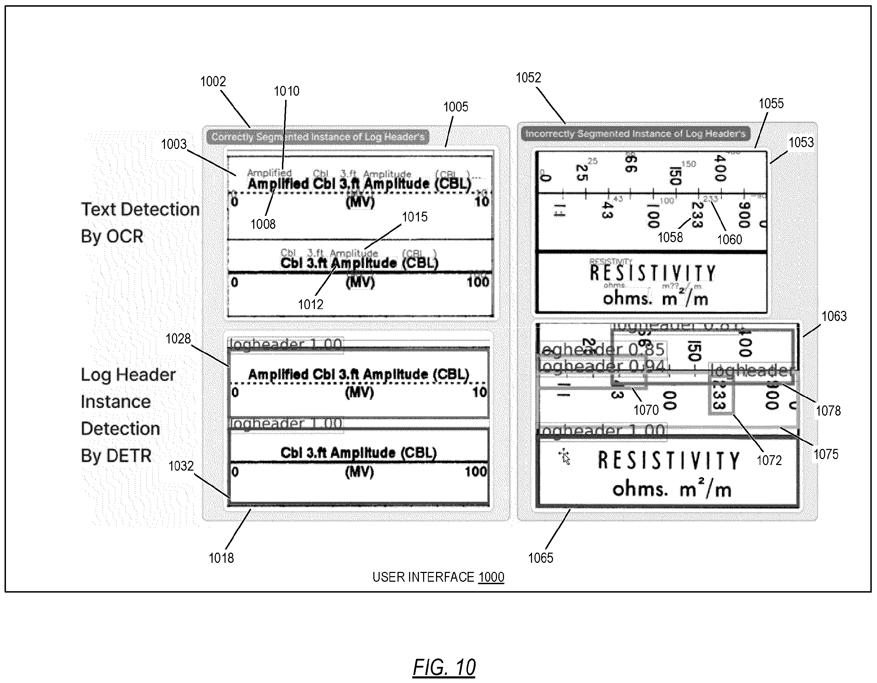

Turning to FIG. 10, the user interface (1000) displays a correctly segmented instance in window (1002) and an incorrectly segmented instance in window (1052). The user interface (1000) may be displayed to a developer during the training to provide verification of the training of the header segmentation components.

The window (1002) displays a view of a correctly segmented initial image. The window (1002) includes the header image (1005) and the header image (1018).

The header image (1005) is displayed after being processed with optical character recognition. The header image (1005) is modified from an initial image to include the recognized text (1010), which was identified from the text (1008). The header image (1005) also includes the recognized text (1015), which was identified from the text (1012).

The header image (1018) is displayed after being processed with a header segmentation component to identify the bounding boxes (1028) and (1032) within the header image (1018). The header image (1018) is modified from the same initial image as the header image (1005) and is modified to display the bounding boxes (1028) and (1032). Each of the bounding boxes (1028) and (1032) were identified with a confidence of "1.00", which may be a maximum level of confidence.

The location of the text (1008) is identified as within the bounding box (1028) and the location of the text (1012) is identified as being within the bounding box (1032). Each of the text items of the initial image are identified as being within one of the header items to yield a correct segmentation of the header items of the initial image.

The window (1052) displays a view of an incorrectly segmented second initial image. The window (1052) includes the header image (1055) and the header image (1065).

The header image (1055) is displayed after being processed with optical character recognition. The header image (1055) is modified from a second initial image to include the recognized text (1060), which was identified from the text (1058).

The header image (1065) is displayed after being processed with a header segmentation component to identify multiple bounding boxes, including the bounding boxes, (1070), (1072), (1075), and (1078). The header image (1065) is modified from the same second initial image as the header image (1055) (but which is different from the initial header image for the header images (1005) and (1018)). Some of the bounding boxes in the header image, (1065) were identified with a less than maximum confidence. For example, the bounding box (1070) was identified with a confidence of "0.85" and the bounding box (1075) was identified with a confidence of "0.94".

The location of the text (1058) is identified as within the bounding box (1072) and the bounding box (1075). Thus, each of the text items within the second initial image are not within a single bounding box to yield an incorrect segmentation of the header items of the second initial image.

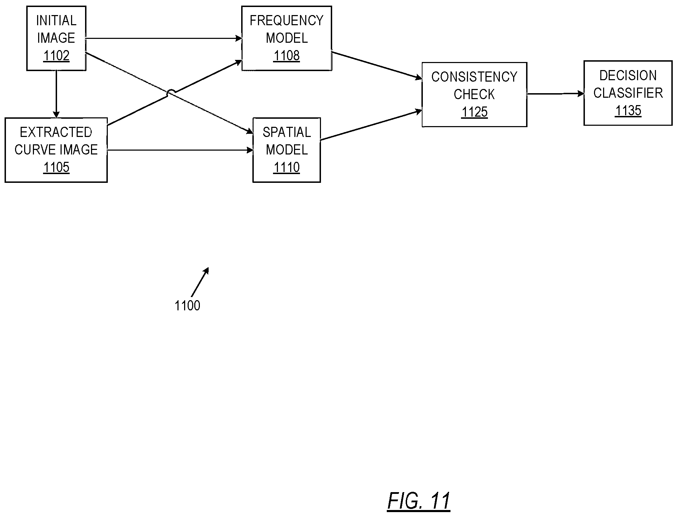

Turning to FIG. 11, the Workflow (1100) processes the initial image (1102) for a retraining decision for a curved segmentation component. The workflow (1100) performs steps of a process to generate information used to determine whether to retrain a curve segmentation component.

The initial image (1102) is an image that is processed with the workflow (1100). The initial image (1102) may be extracted from a document, such as a well log. The initial image (1102) is an input to the frequency model (1108) and the spatial model (1110). The initial image (1102) is also the image from which the extracted curve image (1105) is generated.

The extracted curve image (1105) may be generated from the initial image (1102) with a curved segmentation model of a curved segmentation component. The extracted curve image (1105) includes a curve from within the initial image (1102) without other data from the initial image (1102). The extracted curve image (1105) is an input to the frequency model (1108) and to the spatial model (1110).

The frequency model (1108) executes a process that compares the initial image (1102) with the extracted curve image (1105) to determine if the curve from the initial image (1102) was successfully extracted into the extracted curve image (1105). The frequency model (1108) performs a frequency transformation onto each of the initial image (1102) and the extracted curve image (1105) to convert data from the images from a spatial domain to a frequency domain. The low frequency signals of the frequency domain versions of the images are then compared to determine if the curve segmentation model successfully extracted the curve from the initial image (1102) into the extracted curve image (1105). The output of the frequency model (1108) is input to the consistency check (1125).

The spatial model (1110) executes a process that compares the initial image (1102) with the extracted curve image (1105) to determine if the curve from the initial image (1102) was successfully extracted into the extracted curve image (1105). In an embodiment, the spatial model (1110) performs a grid removal process on the initial image (1102) to remove a grid from the area of the initial image (1102) where the curve is located. The gridless image is compared to the extracted curve image (1105) to determine if the curve was successfully extracted from the initial image (1102) by the curve segmentation model. The output from the spatial model (1110) is input to the consistency check (1125).

The consistency check (1125) is a process that checks the consistency of the results from the frequency model (1108) and the spatial model (1110). The consistency check (1125) may compare the results from the frequency model (1108) to a frequency consistency threshold to determine if the curve was properly extracted. The consistency check (1125) may compare the results from the spatial model (1110) to a spatial consistency threshold to make another determination of whether the curve was properly extracted. The output of the consistency check (1125) may be input to the classifier (1135).

The decision classifier (1135) is a process that classifies the result for the initial image (1102) to determine whether the curve was properly extracted into the extracted curve image (1105). In an embodiment, the decision classifier (1135) may indicate that the extraction was successful when both the frequency model (1108) and the spatial model (1110) satisfied the thresholds within the consistency check (1125).

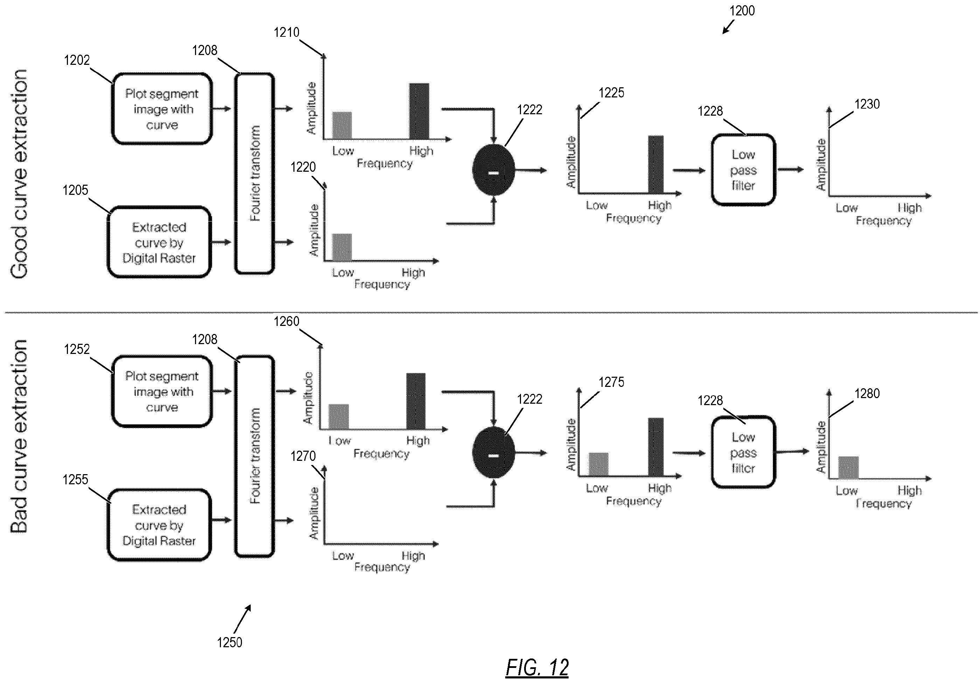

Turning to FIG. 12, workflow (1200) illustrates the determination of a good curve extraction (which may be due to the curve segmentation model being properly trained) and workflow (1250) illustrates the determination of a bad curve extraction (which may trigger retraining of the curve segmentation model). The workflows (1200) and (1250) perform steps of a process to generate information used to determine whether to retrain a curve segmentation component.

The initial image (1202) is a plot segment image that includes a curve, which has been extracted from an image of a document. The extracted curve image (1205) is an image with the curve that is extracted from the initial image (1202) by the curve segmentation model of a raster digitization engine (also referred to as a digital raster).

The initial image (1202) is input to the frequency transform (1208), which performs a Fourier transform to generate the frequency signals displayed in the graph (1210). The graph (1210) indicates that the frequency signals from the initial image (1202) include low frequency signals (corresponding to the curve) and high frequency signals (corresponding to a grid in the initial image).

The extracted curve image (1205) is input to the frequency transform (1208), which generates the graph (1220), for simplicity one out of two dimensions of the Fourier transform is shown. That (1220) indicates that the frequency signals from the extracted curve image (1205) includes low frequency signals without high frequency signals.

The combination component (1222) combines the frequency signals shown in the graph (1210) (from the initial image (1202)) with the frequency signals shown in the graph (1220) (from the extracted curve image (1205)). The combination component (1222) subtracts these signals of the graph (1220) from the signals of the graph (1210) to generate the signals displayed in the graph (1225).

The graph (1225) illustrates the signals output from the combination component (1222). The graph (1225) illustrates the high frequency signals from the graph (1210) remain and the low frequency signals from the graph (1210) are due to the low frequency signals from the graph (1220). The signals from the graph (1225) are input to the low pass filter (1228).

The low pass filter (1228) processes the signals from the graph (1225). The low pass filter (1228) filters out the high frequency signals from the signals of the graph (1225) to generate signals displayed in the graph (1230).

The graph (1230) illustrates the case where no signals are output from the low pass filter (1228). The high frequency signals were removed by the low pass filter (1228) and the low frequency signals were removed by subtracting the signals of the graph (1220) from these signals of the graph (1210). The lack of signals for the graph (1230) indicates that the curve segmentation model properly extracted the curve from the initial image (1202) into the extracted curve image (1205).

Continuing with the workflow (1250), the initial image (1252) may be a different image than the initial image (1202). The extracted curve image (1255) is generated from the initial image (1252) by the curve segmentation model to extract the curve from the initial image (1252). The initial image (1252) and the extracted curve image (1255) are each input to the frequency transform (1208) to respectively generate the signals illustrated in the graph (1260) (for the initial image (1252)) and the graph (1270) (for the extracted curve image (1255)), for simplicity one of the two dimensions of the Fourier transform is shown for each graph. The graph (1260) indicates that the Fourier transform of the initial image (1252) includes low frequency and high frequency signals. The graph (1270) indicates that the Fourier transform of the extracted curve image (1255) does not include low frequency signals (which may correspond to a curve) and does not include high frequency signals (which may correspond to other information, such as grid lines).

The signals of the graphs (1260) and (1270) are input to the combination component (1222). The combination component (1222) subtracts the signals of the graph (1270) from the signals of the graph of (1260) to generate the signals of the graph (1275). The signals of the graph (1275) include both low frequency signals and high frequency signals since the signals of the graph (1270) did not include low frequency signals to subtract out the low frequency signals from the signals of the graph (1260).

The signals of the graph (1275) are input to the low pass filter (1228). The low pass filter (1228) processes the signals of the graph (1275) to generate the signals of the graph (1280).

The graph (1280) illustrates the case where low frequency signals remain after the signals of the graph (1275) are processed with the low pass filter (1228). The presence of the low frequency signals for the signals of the graph (1280) indicates that the curve segmentation model did not properly extract the curve from the initial image (1252) when generating the extracted curve image (1255) and may be retrained.

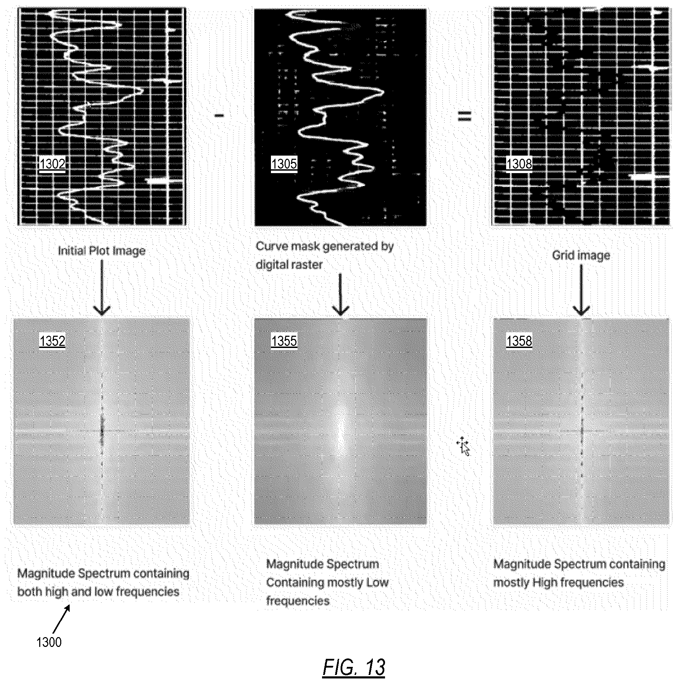

Turning to FIG. 13, the workflow (1300) illustrates operations performed on the images processed by the system. The operations may be used by components of the system to determine if the curve segmentation model is properly trained.

The initial image (1302) includes a curve and grid lines. The extracted curve image (1305) is a curve mask that includes the curve identified from the initial image (1302). Subtracting the extracted curve image (1305) from the initial image (1302) generates the grid image (1308), which contains the grid from the initial image (1302). The Images (1302), (1305), and (1308) are in the spatial domain.

The initial frequency spectrum (1352) is generated from the initial image (1302) with a frequency transform and may contain both low and high frequency signals. The curve frequency spectrum (1355) is generated from the extracted curve image (1305) with the frequency transform and may contain low frequency signals without high frequency signals. The curve frequency spectrum (1355) is subtracted from the initial frequency spectrum (1352) to generate the combined frequency spectrum (1358). The combined frequency spectrum (1358) may include high frequency signals without low frequency signals.

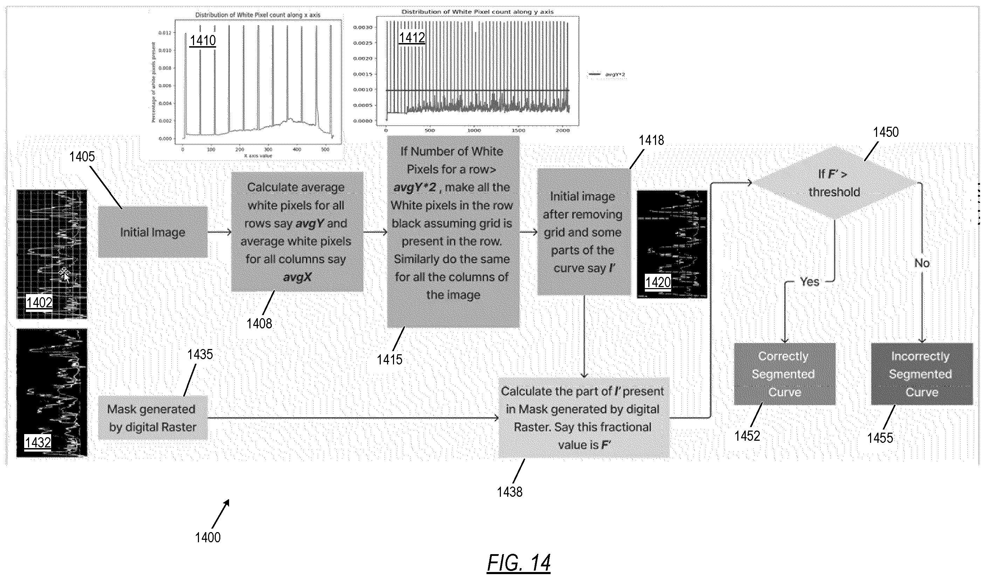

Turning to FIG. 14, the workflow (1400) processes the inputs and outputs of the curve segmentation model. The workflow (1400) processes the inputs and outputs to determine if the curve segmentation model is properly trained. The workflow (1400) utilizes multiple components.

Image (1402) is an image extracted from a document, which may be a well log. The initial image (1405) is a representation of the initial image (1402) that is input to the component (1408).

The component (1408) calculates the averages of the number of foreground pixels (e.g., white pixels) in the rows of the initial image (1405) (referred to as "avgY") and calculates the averages of the number of foreground pixels in the columns of the initial image (1405) (referred to as "avgX"). The graph (1410) depicts the distribution of white pixels along the x axis for the initial image (1402), which when averaged identifies the value of "avgX". The graph (1412) depicts the distribution of white pixels along the y axis for the initial image (1402), which, when averaged, identifies the value of "avgY".

The component (1415) removes rows and columns of foreground pixels based on a comparison of the number of foreground pixels in a row or column to "avgY" or "avgX". As an example, if the number of foreground pixels in a row is greater than twice the value of "avgY" then the entire row of pixels may be set to the background color. Different multiples of the average number of foreground pixels may be used as the threshold.

The gridless image (1418) is the output from the component (1415). The gridless image (1420) is an illustration of the gridless image (1418). The gridless image (1418) is an input to the component (1438).

The extracted curve image (1432) is an image generated from the initial curve image (1402) by applying the mask (1435) (generated by a curve segmentation model of a raster digitization engine) to the initial image (1402). The extracted curve image (1432) is an input to the component (1438).

The component (1438) calculates the overlap between the gridless image (1418) and the extracted curve image (1432). In an embodiment, the overlap may be calculated as the intersection of the foreground pixels of the gridless image (1418) and the foreground pixels of the extracted curve image (1432).

The component (1450) compares the output of the component (1438) to a threshold. If the output from the component (1438) satisfies the threshold (e.g., is greater than the threshold), then the signal (1452) is triggered to indicate that the curve from the initial image (1402) was correctly extracted. If the output from the component (1438) does not satisfy the threshold (e.g., is not greater than the threshold), then the signal (1455) is triggered to indicate that the curve from the initial image (1402) was not correctly extracted. The signals (1452) and (1455) may be used in the determination of whether the curve segmentation model should be retrained.

Embodiments may be implemented on a special purpose computing system specifically designed to achieve the improved technological result. Turning to FIG. 15A and FIG. 15B, the special purpose computing system (1500) may include one or more computer processors (1502), non-persistent storage (1504), persistent storage (1506), a communication interface (1512) (e.g., Bluetooth interface, infrared interface, network interface, optical interface, *etc.),* and numerous other elements and functionalities that implement the features and elements of the disclosure. The computer processor(s) (1502) may be an integrated circuit for processing instructions. The computer processor(s) may be one or more cores or micro-cores of a processor. The computer processor(s) (1502) includes one or more processors. The one or more processors may include a central processing unit (CPU), a graphics processing unit (GPU), a tensor processing unit (TPU), combinations thereof, *etc.*

The input devices (1510) may include a touchscreen, keyboard, mouse, microphone, touchpad, electronic pen, or any other type of input device. The input devices (1510) may receive inputs from a user that are responsive to data and messages presented by the output devices (1508). The inputs may include text input, audio input, video input, *etc.,* which may be processed and transmitted by the computing system (1500) in accordance with the disclosure. The communication interface (1512) may include an integrated circuit for connecting the computing system (1500) to a network (not shown) (e.g., a local area network (LAN), a wide area network (WAN) such as the Internet, mobile network, or any other type of network), and/or to another device, such as another computing device.

Further, the output devices (1508) may include a display device, a printer, external storage, or any other output device. One or more of the output devices may be the same or different from the input device(s). The input and output device(s) may be locally or remotely connected to the computer processor(s) (1502). Many different types of computing systems exist, and the aforementioned input and output device(s) may take other forms. The output devices (1508) may display data and messages that are transmitted and received by the computing system (1500). The data and messages may include text, audio, video, *etc.,* and include the data and messages described above in the other figures of the disclosure.

Software instructions in the form of computer readable program code to perform embodiments may be stored, in whole or in part, temporarily or permanently, on a non-transitory computer readable medium such as a CD, DVD, storage device, a diskette, a tape, flash memory, physical memory, or any other computer readable storage medium. Specifically, the software instructions may correspond to computer readable program code that, when executed by a processor(s), is configured to perform one or more embodiments, which may include transmitting, receiving, presenting, and displaying data and messages described in the other figures of the disclosure.

The computing system (1500) in FIG. 15A may be connected to or be a part of a network. For example, as shown in FIG. 15B, the network (1520) may include multiple nodes *(e.g.,* node X (1522), node Y (1524)). Each node may correspond to a computing system, such as the computing system shown in FIG. 15A, or a group of nodes combined may correspond to the computing system shown in FIG. 15A. By way of an example, embodiments may be implemented on a node of a distributed system that is connected to other nodes. By way of another example, embodiments may be implemented on a distributed computing system having multiple nodes, where each portion may be located on a different node within the distributed computing system. Further, one or more elements of the aforementioned computing system (1500) may be located at a remote location and connected to the other elements over a network.

The nodes (e.g., node X (1522), node Y (1524)) in the network (1520) may be configured to provide services for a client device (1526), including receiving requests and transmitting responses to the client device (1526). For example, the nodes may be part of a cloud computing system. The client device (1526) may be a computing system, such as the computing system shown in FIG. 15A. Further, the client device (1526) may include and/or perform all or a portion of one or more embodiments of the disclosure.

The computing system of FIG. 15A may include functionality to present raw and/or processed data, such as results of comparisons and other processing. For example, presenting data may be accomplished through various presenting methods. Specifically, data may be presented by being displayed in a user interface, transmitted to a different computing system, and stored. The user interface may include a graphical user interface (GUI) that displays information on a display device. The GUI may include various GUI widgets that organize what data is shown as well as how data is presented to a user. Furthermore, the GUI may present data directly to the user, e.g., data presented as actual data values through text, or rendered by the computing device into a visual representation of the data, such as through visualizing a data model.

As used herein, the term "connected to" contemplates multiple meanings. A connection may be direct or indirect (e.g., through another component or network). A connection may be wired or wireless. A connection may be temporary, permanent, or semi-permanent communication channel between two entities.

The various descriptions of the figures may be combined and may include or be included within the features described in the other figures of the application. The various elements, systems, components, and steps shown in the figures may be omitted, repeated, combined, and/or altered as shown from the figures. Accordingly, the scope of the present disclosure should not be considered limited to the specific arrangements shown in the figures.

In the application, ordinal numbers *(e.g.,* first, second, third, *etc.)* may be used as an adjective for an element *(i.e.,* any noun in the application). The use of ordinal numbers is not to imply or create any particular ordering of the elements, nor to limit any element to being a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

Further, unless expressly stated otherwise, or is an "inclusive or" and, as such includes "and." Further, items joined by an "or" may include any combination of the items with any number of each item unless expressly stated otherwise.

In the above description, numerous specific details are set forth in order to provide a more thorough understanding of the disclosure. However, it will be apparent to one of ordinary skill in the art that the technology may be practiced without these specific details. In other instances, well-known features have not been described in detail to avoid unnecessarily complicating the description. Further, other embodiments not explicitly described above may be devised which do not depart from the scope of the claims as disclosed herein. Accordingly, the scope should be limited only by the attached claims.

## Claims

1. A method comprising:
generating a raster retraining score for a raster segmentation model of a raster digitization engine;
generating a header retraining score for a header segmentation model of the raster digitization engine;
generating a curve retraining score for a curve segmentation model of the raster digitization engine; and
retraining one or more of the raster segmentation model, the header segmentation model, and the curve segmentation model using the raster retraining score, the header retraining score, and the curve retraining score.

2. The method of claim 1, wherein generating the raster retraining score comprises:
executing the raster segmentation model for a first stage to generate a plurality of masks comprising a first header mask.

3. The method of claim 1 or 2, wherein generating the raster retraining score comprises:
executing a header mask segmentation model for a second stage to generate a second header mask.

4. The method of any of the preceding claims, wherein generating the raster retraining score comprises:
executing a segment comparison model using a first header mask with a second header mask to generate a comparison score.

5. The method of any of the preceding claims, wherein generating the raster retraining score comprises:
generating the raster retraining score from a comparison score for the raster segmentation model of the raster digitization engine.

6. The method of any of the preceding claims, wherein generating the header retraining score comprises:
executing a text extraction model using a header image to generate extraction output comprising text items and location coordinates for each of the text items.

7. The method of any of the preceding claims, wherein generating the header retraining score comprises:
executing the header segmentation model using a header image to generate a set of bounding boxes.

8. The method of any of the preceding claims, wherein generating the header retraining score comprises:
executing a box verification model using location coordinates and a set of bounding boxes to generate a verification score; and
generating the header retraining score from the verification score for the header segmentation model of the raster digitization engine.

9. The method of any of the preceding claims, wherein generating the curve retraining score comprises:
executing a frequency model using an initial image and an extracted curve image to generate a frequency model score;
executing a spatial model using an initial image and an extracted curve image to generate a spatial model score; and
generating the curve retraining score from a frequency model score and the spatial model score for the curve segmentation model of the raster digitization engine.

10. The method of any of the preceding claims, wherein retraining one or more of the raster segmentation model, the header segmentation model, and the curve segmentation model is further based on a membership attack inference determination and further comprises:
determining a similarity of user data to training data used to train the one or more of the raster segmentation model, the header segmentation model, and the curve segmentation model to form the membership attack inference determination; and
retraining the one or more of the raster segmentation model, the header segmentation model, and the curve segmentation model when the membership attack inference determination indicates the user data is not within the training data.

11. A system comprising
at least one processor; and
an application that, when executing on the at least one processor, performs operations comprising the steps of the method according to any of the preceding claims.

12. A non-transitory computer readable medium comprising instructions executable by at least one processor to perform the steps of the method according to any of the claims 1 - 10.
